# EUROPÄISCHE PATENTSCHRIFT

(11) **EP 3 820 614 B1**
(45) Veröffentlichungstag und Bekanntmachung des Hinweises auf die Patenterteilung: **13.11.2024**
(21) Anmeldenummer: 19748709.3
(22) Anmeldetag: 09.07.2019
(51) Int. Cl.: B01L 3/02, G01N 35/10

(54) **PIPETTIERVORRICHTUNG ZUR IMPULSARTIGEN PIPETTIERUNG MIT EINER BASIEREND AUF EINER ERFASSUNG DER KOLBENPOSITION GEREGELTEN PIPETTIERKOLBENBEWEGUNG**
PIPETTING DEVICE FOR PULSED PIPETTING WITH A PIPETTING PISTON MOVEMENT CONTROLLED ON THE BASIS OF A DETECTION OF THE PISTON POSITION
DISPOSITIF DE PIPETAGE POUR PIPETAGE PAR IMPULSIONS PAR DÉPLACEMENT DU PISTON DE PIPETAGE RÉGULÉ SUR LA BASE D'UNE DÉTECTION DE LA POSITION DE PISTON

(30) Priorität: 11.07.2018 DE 102018211497
(43) Veröffentlichungstag der Anmeldung: 19.05.2021
(73) Patentinhaber: Hamilton Bonaduz AG, 7402 Bonaduz (CH)
(72) Erfinder: ROMER, Hanspeter, 8340 Hinwil (CH); ETTINGER, Reto, 8610 Uster (CH); GYSEL, Fridolin, 8134 Adliswil (CH); RAST, Jürg, 8753 Mollis (CH); HILTI, Jonas, 9496 Balzers (CH)
(74) Vertreter: Ruttensperger Lachnit Trossin Gomoll
(86) Internationale Anmeldenummer: PCT/EP2019/068417
(87) Internationale Veröffentlichungsnummer: WO 2020/011787

(56) Entgegenhaltungen:
- EP-A1- 2 656 917
- DE-A1- 102012 214 677
- DE-A1- 102015 214 566
- US-A1- 2011 318 242

## Beschreibung

Die vorliegende Erfindung betrifft eine Pipettiervorrichtung zum impulsartigen Pipettieren von Dosierflüssigkeiten in kleinen Dosiervolumina von weniger als 2 µl unter Vermittlung eines druckveränderlichen Arbeitsgases gemäß dem Oberbegriff von Anspruch 1.

Durch die Steuervorrichtung ist der Bewegungsantrieb zur Bewirkung eines Pipettiervorgangs gezielt ansteuerbar, um durch entsprechende Ansteuerung des Bewegungsantriebs den Pipettierkolben in gewünschter Weise zu bewegen und um dadurch wiederum den Druck des Arbeitsgases in gewünschter Weise zu verändern.

Eine impulsartige Dispensation im Sinne der vorliegenden Erfindung ist bekannt aus der US 2001/0016358 A1. Dort wird jedoch kein Überdruckimpuls durch ein Arbeitsgas vermittelt, sondern es wird durch einen Piezoaktuator unmittelbar ein körperlicher Schlag auf den der Pipettieröffnung ferner liegenden Meniskus der in der Pipettiervorrichtung bereitgestellten Dosierflüssigkeit abgegeben und dadurch am entgegengesetzten Längsende der bereitgestellten Dosierflüssigkeitssäule von dem der Pipettieröffnung näher gelegenen Meniskus ein Tropfen abgeschleudert.

Die Nachteile dieses bekannten Verfahrens liegen auf der Hand: Aufgrund des Kontakts des Piezoaktuators mit der Dosierflüssigkeit ist ein erhöhtes Kontaminationsrisiko gegeben.

Eine gattungsgemäße impulsartig pipettierende Pipettiervorrichtung im Sinne der vorliegenden Anmeldung ist in der DE 10 2015 214 566 A1 beschrieben. Diese Druckschrift lehrt ganz allgemein einen Zusammenhang zwischen einer Fläche unter einem Graphen, welcher eine Kolbenbewegung zur Erzeugung eines Dosierimpulses repräsentiert, und einem durch die betreffende Kolbenbewegung pipettierten Einzel-Dosiervolumen. Es kommt bei diesem Zusammenhang auf die Fläche unter dem Graphen, nicht dagegen auf den konkreten Verlauf des Graphen an. Einzige einzuhaltende Bedingung ist, dass durch die Kolbenbewegung ein Druckstoß im Arbeitsgas bewirkt wird, welche vom Arbeitsgas auf Dosierflüssigkeit impulsartig übertragen wird.

Aus der EP 2 656 917 A1 ist eine Pipettiervorrichtung mit linearmotorisch angetriebenem Pipettierkolben bekannt, der Läufer des an der Pipettiervorrichtung gebildeten Linearmotors ist. Die offenbart EP 2 656 917 A1 ausschließlich eine Kolbenbewegung für ein herkömmliches Pipettierverfahren, welches nach anderen physikalischen Wirkprinzipien funktioniert als das in der vorliegenden Anmeldung einschlägige impulsartige Pipettieren. Erkenntnisse des herkömmlichen Pipettierverfahrens und seiner Ausführung lassen sich wegen der unterschiedlichen physikalischen Wirkprinzipien zwischen quasi-synchronem herkömmlichem Pipettieren einerseits und impulsartigem Pipettieren andererseits nicht zwischen den unterschiedlichen Pipettierverfahren übertragen. Im Gegensatz zum impulsartigen Pipettieren ist nämlich beim herkömmlichen Pipettieren die Bewegung des Pipettierkolbens proportional zur pipettierten Dosierflüssigkeitsmenge.

Es ist Aufgabe der vorliegenden Erfindung, eine Pipettiervorrichtung anzugeben, welche in der Lage ist, sowohl möglichst hygienisch, also mit möglichst geringem Kontaminationsrisiko, als auch in kleinen Dosiermengen möglichst hochgenau zu pipettieren.

Diese Aufgabe wird gemäß der vorliegenden Erfindung gelöst durch eine Pipettiervorrichtung mit allen Merkmalen des Anspruchs 1. Eine erfindungsgemäße Pipettiervorrichtung umfasst:
- einen wenigstens teilweise mit Arbeitsgas gefüllten Pipettierkanal,
- eine Pipettierspitze, welche einen wenigstens teilweise mit Arbeitsgas gefüllten Aufnahmeraum bereitstellt, der mit dem Pipettierkanal Druck kommunizierend in Verbindung steht und der durch eine Pipettieröffnung zugänglich ist, so dass mittels Veränderung des Drucks des Arbeitsgases im Aufnahmeraum durch die Pipettieröffnung hindurch die Menge an im Aufnahmeraum aufgenommener Dosierflüssigkeit veränderbar ist,
- einen längs des Pipettierkanals beweglich im Pipettierkanal aufgenommenen Pipettierkolben zur Veränderung des Drucks des Arbeitsgases,
- einen Bewegungsantrieb, um den Pipettierkolben zur Bewegung längs des Pipettierkanals anzutreiben,
- eine Steuervorrichtung zur Ansteuerung des Bewegungsantriebs, und
- eine Positionserfassungsvorrichtung zur Erfassung der Position des Pipettierkolbens und zur Ausgabe eines die Position des Pipettierkolbens repräsentierenden Positionssignals, an die Steuervorrichtung,
wobei die Steuervorrichtung dazu ausgebildet ist, den Bewegungsantrieb zur Erzeugung eines - bezogen auf einen unmittelbar vor Beginn eines Pipettiervorgangs im Pipettierkanal herrschenden Bezugsdruck, bei welchem kein Fluid durch die Pipettieröffnung hindurchtritt, - Druckimpulses im Pipettierkanal derart auf Grundlage des von der Positionserfassungsvorrichtung ausgegebenen Positionssignals anzusteuern, dass die Position des Pipettierkolbens während des Impulses einem vorgegebenen Pipettierkolben-Soll-Positionsverlauf folgt, wobei die Dauer der Pipettierkolbenbewegung zur Erzeugung des Druckimpulses 35 ms nicht übersteigt.

Durch die Ausbildung zum Pipettieren im sogenannten "Air-Displacement"-Verfahren, bei welchem mit dem Pipettierkolben der Druck eines zwischen Pipettierkolben und Dosierflüssigkeit vorhandenen Arbeitsgases verändert wird, um Dosierflüssigkeit durch die Pipettieröffnung hindurch zu dispensieren oder zu aspirieren, kommt es mit Ausnahme der unvermeidlichen Pipettierspitze zu keinem Kontakt zwischen einem Bauteil oder Bauteilabschnitt der Pipettiervorrichtung und der Dosierflüssigkeit.

Es hat sich außerdem herausgestellt, dass eine Regelung der Kolbenbewegung zur Erzeugung eines Druckimpulses im Arbeitsgas nach Maßgabe des Arbeitsgasdrucks selbst für sehr kurze Druckimpulse von weniger als 40 ms möglich ist. Hierzu reicht eine Kolbenbewegung mit einer Dauer von nicht mehr als 35 ms aus. Mittels einer auf der Position des Pipettierkolbens im Pipettierkanal basierenden Regelung der Pipettierkolbenbewegung durch die Steuervorrichtung auf Grundlage eines für die zu pipettierende Dosierflüssigkeit vorbestimmten Pipettierkolben-Soll-Positionsverlauf ist ein hochgenaues Pipettieren selbst kleinster Dosierflüssigkeitsmengen im Sub-Mikroliter-Bereich möglich.

Die Kolbenbewegung zur impulsartigen Pipettierung mit einer Dauer von 35 ms oder weniger ist bevorzugt die einzige Kolbenbewegung des Pipettiervorgangs, die eine Bewegung von Dosierflüssigkeit von weniger als 2 µl durch die Pipettieröffnung hindurch und damit eine entsprechende Dosierung bewirkt.

Eine grundsätzlich ebenfalls mögliche Regelung der Pipettierkolbenbewegung nach Maßgabe eines Vergleichs des erfassten Ist-Drucks des Arbeitsgases mit einem Arbeitsgas-Soll-Druckverlauf hat sich als schwierig erwiesen, da während eines impulsartigen Pipettiervorgangs Resonanzeffekte im Arbeitsgas auftreten können. Der hauptsächlich hierfür verantwortlich gemachte Helmholtz-Resonanzeffekt kann bei impulsartiger Änderung des Arbeitsgasdrucks zu Schwingungen im Drucksignal führen, welche die Verwendung des erfassten Arbeitsgasdrucks als Regelgröße erheblich erschweren.

In der vorliegenden Anmeldung ist der Begriff eines erfassten Werts einer Größe gleichbedeutend mit dem Begriff eines "Ist-Werts" dieser Größe.

In der vorliegenden Anmeldung ist mit einem "Druckimpuls" bzw. einer "impulsartigen" Pipettierung ein eine Dosierflüssigkeitsaufnahme (Aspiration) in die Pipettierspitze oder eine Dosierflüssigkeitsabgabe (Dispensation) aus dieser bewirkender Druckimpuls im Arbeitsgas mit einer gesamten Impulsdauer von nicht mehr als 40 ms bezeichnet. Wegen trägheitsbedingten Abklingeffekten am Arbeitsgas ist die Dauer des Druckimpulses üblicherweise länger als die Dauer der den Druckimpuls bewirkenden Pipettierkolbenbewegung. Die Dauer der Pipettierkolbenbewegung ist dabei die Zeitspanne zwischen dem Verlassen einer Pipettierkolben-Bezugsposition bzw. Pipettierkolben-Startposition, in welcher sich der Pipettierkolben unmittelbar vor dem Pipettiervorgang befindet, und einem erneuten Stillstand des Pipettierkolbens. Ein Totpunkt einer Bewegungsumkehr, an welchem punktuell eine Kolbengeschwindigkeit von 0 vorliegt, ist kein Stillstand des Pipettierkolbens im Sinne der vorliegenden Anmeldung. Dann, wenn sich der Pipettierkolben unmittelbar vor Beginn des Pipettiervorgangs in der Pipettierkolben-Startposition befindet, herrscht im Arbeitsgas der Bezugsdruck, bei welchem keine Dosierflüssigkeit durch die Pipettieröffnung hindurchtritt und bei welchem bevorzugt eine in der Pipettierspitze etwaig vorhandene Dosierflüssigkeit im Wesentlichen bewegungslos gehalten wird.

Um ein kleines Dosiervolumen an Dosierflüssigkeit in einem einzigen zusammenhängenden Tropfen, also ohne unerwünschte Satellitentröpfchen, definiert zu pipettieren, insbesondere beim Dispensieren abzulösen, kann der Druckimpuls bevorzugt einen Überdruckanteil und einen Unterdruckanteil umfassen. Bei dem in der Praxis wesentlich bedeutenderen impulsartigen Dispensieren geht der Überdruckanteil dem Unterdruckanteil im Druckimpuls zeitlich voraus.

Sowohl der Überdruckanteil als auch der Unterdruckanteil liegen innerhalb des angegebenen Druckimpuls-Zeitfensters von maximal 40 ms.

Ebenfalls mit dem Ziel das angegebene kleine Dosiervolumen in einem Tropfen ohne Bildung von unerwünschten Satellitentröpfchen zu pipettieren, kann der Pipettierkolben-Soll-Positionsverlauf eines Pipettiervorgangs Pipettierkolben-Sollpositionen beiderseits der Startposition oder/und der Endposition des Pipettierkolbens zu Beginn bzw. am Ende des Pipettiervorgangs enthalten. Beim impulsartigen Dispensieren geht wenigstens ein Großteil der Pipettierkolben-Sollpositionen, welche auf der den Arbeitsgasdruck erhöhenden Seite (Dispensationsseite) der Startposition liegen, den auf der den Arbeitsgasdruck verringernden Seite (Aspirationsseite) gelegenen Pipettierkolben-Sollpositionen zeitlich voraus. Sind Start- und Endposition des Pipettierkolbens für einen Pipettiervorgang identisch, was beim impulsartigen Pipettieren grundsätzlich möglich ist, gehen bevorzugt alle auf der Dispensationsseite der Start- und Endposition gelegenen Pipettierkolben-Sollpositionen allen auf der Aspirationsseite der Start- und Endposition gelegenen Pipettierkolben-Sollpositionen zeitlich voraus. Liegt dagegen die Endposition des Pipettierkolbens für einen Dispensationsvorgang von dessen Startposition entfernt auf der Dispensationsseite der Startposition, kann der gesamte Pipettierkolben-Soll-Positionsverlauf zur Erzeugung des pipettierenden Druckimpulses auf ein und derselben Seite der Startposition gelegen sein. Dann liegt der Pipettierkolben-Soll-Positionsverlauf jedoch stets auf beiden Seiten: Dispensationsseite und Aspirationsseite, der Endposition der Kolbenbewegung. Unabhängig von der relativen Lage von Start- und Endposition der Kolbenbewegung zueinander umfasst der Pipettierkolben-Soll-Positionsverlauf bevorzugt wenigstens zwei, besonders bevorzugt genau zwei Totpunkte einer Bewegungsumkehr. Dies bedeutet mit anderen Worten, die Pipettierkolbenbewegung weist nicht mehr als drei, besonders bevorzugt nur drei, zeitlich aufeinander folgende Bewegungsphasen auf, in welchen die Bewegungsrichtung des Kolbens in einer nachfolgenden Phase entgegengesetzt zur Bewegungsrichtung in der jeweils unmittelbar vorhergehenden Phase ist. Am Beispiel eines impulsartigen Dispensationsvorgangs bewegt sich der Pipettierkolben in der ersten Phase nur in Dispensationsrichtung, dann in der zweiten Phase nur in Aspirationsrichtung und schließlich in der dritten Phase wieder nur in Dispensationsrichtung. Die dritte Phase ist dabei in der Regel die zeitlich kürzeste mit dem geringsten Bewegungshub des Kolbens.

Im einfachsten Fall einer zeitlich besonders kurzen Pipettierkolbenbewegung ändert sich die Bewegungsrichtung des Pipettierkolbens während eines Pipettiervorgangs nur einmal, am Beispiel eines Dispensationsvorgangs von einer Bewegung in Dispensationsrichtung in eine Bewegung in Aspirationsrichtung. Die oben genannte dritte Phase kann dann entfallen.

Mit "impulsartiger" Dispensation ist eine vom herkömmlichen bekannten Pipettierbetrieb abweichende Dispensation bezeichnet. Bei der impulsartigen Dispensation wird durch den Überdruckimpuls des Arbeitsgases ein Druckschlag vom Arbeitsgas auf die von einer Dosieröffnung abgewandte Seite der in einer Pipettiervorrichtung aufgenommenen Dosierflüssigkeitsmenge ausgeübt. Dieser Druckschlag pflanzt sich durch die inkompressible Dosierflüssigkeitsmenge bis zu einem der Pipettieröffnung näher gelegenen Meniskus der aufgenommenen Dosierflüssigkeitsmenge fort und führt dort zum Abschleudern eines Dosierflüssigkeitstropfens. Das Abschleudern des Dosierflüssigkeitstropfens kann durch eine peitschenartige Kolbenbewegung, bei welcher einer stark beschleunigten Kolbenbewegung in Dispensationsrichtung eine wiederum stark beschleunigte Kolbenbewegung in Aspirationsrichtung zeitlich unmittelbar folgt, definiert ausgelöst werden. Der so entstehende Unterdruckanteil im Druckimpulsverlauf des Arbeitsgases ist dabei betragsmäßig kleiner und zeitlich nicht länger, bevorzugt sogar kürzer als der vorausgehende Überdruckanteil.

Auf diese Art und Weise lassen sich sehr kleine Flüssigkeitsmengen von weniger als 2 µl bzw. bevorzugt von weniger als 600 nl mit hoher Wiederholgenauigkeit dosieren und sogar aliquotieren, also wiederholt aus einer volumenmäßig größeren im Aufnahmeraum der Pipettierspitze aufgenommenen Dosierflüssigkeitsmenge dispensieren, ohne zwischen einzelnen Dispensationsvorgängen Dosierflüssigkeit zu aspirieren. Zur Klarstellung der in der vorliegenden Anmeldung verwendeten Begrifflichkeit: ein Aliquotieren umfasst stets eine Mehrzahl von Dispensationsvorgängen, nämlich für jede während des Aliquotierens abgegebene Dosierflüssigkeitsmenge genau einen.

Im Gegensatz zur impulsartigen Dispensation wird beim herkömmlichem Dispensieren die mit der Pipettiervorrichtung aufgenommene Dosierflüssigkeit durch Erhöhung des Drucks im Arbeitsgas ausgeschoben, bis sich entweder ein Tropfen von der Pipettieröffnung schwerkraftgetrieben ablöst oder es wird durch die Pipettieröffnung hindurch Dosierflüssigkeit auf ein von der Dosierflüssigkeit benetztes Substrat oder in eine bereits vorhandene Flüssigkeit dosiert, von welchem bzw. von welcher die Pipettieröffnung nach Abgabe der vorbestimmten Dosiermenge abgehoben wird. Beim herkömmlichen quasi-synchronen Dispensieren bewegt sich üblicherweise Dosierflüssigkeit nur solange in Dispensationsrichtung durch die Pipettieröffnung, solange auch der Pipettierkolben in Dispensationsrichtung (den Druck im Arbeitsgas erhöhend) bewegt wird.

Während also beim herkömmlichen Dispensieren die Druckänderung im Arbeitsgas, und somit die Bewegung eines Pipettierkolbens, synchron oder quasi-synchron mit der Abgabe von Dosierflüssigkeit durch eine Pipettieröffnung der Pipettiervorrichtung erfolgt, ist die der vorliegenden Erfindung zu Grunde liegende impulsartige Dispensation diesbezüglich asynchron, d. h. auf eine impulsartige, schlagartige Erzeugung eines Überdruckimpulses im Arbeitsgas wird der Tropfen der Dosierflüssigkeit in der Regel erst von der aufgenommenen Dosierflüssigkeitsmenge abgeschleudert, während der Überdruckimpuls wenigstens im Abklingen begriffen ist oder sogar abgeklungen ist. Die Abgabe des Dosierflüssigkeitstropfens erfolgt somit nicht synchron mit einer Bewegung des Pipettierkolbens. Der Dosierflüssigkeitstropfen bewegt sich beim impulsartigen Dispensieren in Dispensationsrichtung, während sich der Pipettierkolben im Sinne einer Aspiration (den Druck im Arbeitsgas verringernd) bewegt oder bereits wieder stillsteht. Wie schnell der Pipettierkolben zur impulsartigen Dispensation bewegt werden muss, hängt dabei von der Art der zu dispensierenden Dosierflüssigkeit ab, etwa von ihrer Viskosität oder/und ihrer Dichte oder/und Oberflächenspannung. So kann ganz allgemein ein Pipettierkolben-Soll-Positionsverlauf vorab für unterschiedliche Dosierflüssigkeiten oder Dosierflüssigkeitsklassen sowie für unterschiedliche zu dosierende Mengen ermittelt und in einem Datenspeicher der Pipettiervorrichtung abrufbar hinterlegt werden.

Bei der impulsartigen Dispensation werden die zu dosierenden Flüssigkeitsmengen als Tropfen in der Regel mit einer Beschleunigung von der in der Pipettiervorrichtung aufgenommenen Dosierflüssigkeitsmenge abgegeben, die bei Dispensation in Wirkungsrichtung der Schwerkraft zur Erdbeschleunigung hinzutritt. Dies bedeutet: die bei impulsartiger Dispensation durch die Pipettiervorrichtung von der aufgenommenen Dosierflüssigkeitsmenge abgelösten Dosierflüssigkeitstropfen bewegen sich bei Dispensation in Schwerkraftwirkungsrichtung schneller als lediglich im freien Fall von der Pipettiervorrichtung weg.

Große Mengen an Dosierflüssigkeit, also Mengen von mehr als 2 µl, werden in der Regel in einem in der vorliegenden Anmeldung auch als "herkömmlich" bezeichneten synchronen Betriebsmodus der Pipettiervorrichtung pipettiert, in welchem die Dosierflüssigkeit in der Pipettierspitze, genauer ihr zum Kolben hinweisender Meniskus, der Bewegung der pipettieröffnungsseitigen bzw. dosierseitigen Endfläche des Kolbens synchron folgt. Dies bedeutet, dass sich der Meniskus dann, wenn der Kolben in einer Dispensationsrichtung als einer Pipettierrichtung bewegt wird, gemeinsam mit der dosierseitigen Endfläche des Kolbens in Dispensationsrichtung bewegt, und sich dann, wenn der Kolben in einer Aspirationsrichtung als einer Pipettierrichtung bewegt wird, gemeinsam mit der dosierseitigen Endfläche des Kolbens in Aspirationsrichtung bewegt. Es kann zu einem geringfügigen zeitlichen Versatz zwischen der Bewegung der dosierseitigen Endfläche des Kolbens und dem kolbennäheren Meniskus der Dosierflüssigkeit kommen, da das zwischen dem Kolben und der Dosierflüssigkeit vorhandene Arbeitsgas zunächst zur Überwindung von Reibungs-, Kapillar-, Adhäsions-, Kohäsions- oder/und Oberflächeneffekten erst durch die Kolbenbewegung auf ein Druckniveau gebracht werden muss, auf welchem der gewünschte Pipettiervorgang ablaufen kann. Dies ist beim Aspirieren ein Unterdruck gegenüber dem Umgebungsdruck, sodass Dosierflüssigkeit getrieben durch den Differenzdruck zwischen dem Druck des Arbeitsgases und dem Umgebungsdruck von einem Dosierflüssigkeitsvorrat, in welchen die Pipettieröffnung der Pipettierspitze eingetaucht ist, in die Pipettierspitze einströmt. Dies ist beim Dispensieren ein Überdruck gegenüber dem Umgebungsdruck, sodass in der Pipettierspitze aufgenommene Dosierflüssigkeit getrieben vom Differenzdruck zwischen dem Druck des Arbeitsgases und dem Umgebungsdruck durch die Pipettieröffnung der Pipettierspitze austritt. Das kompressible Arbeitsgas wirkt somit wie eine Gasfeder. Aufgrund des geringen, aber vorhandenen zeitlichen Versatzes zwischen der Kolbenbewegung und der Bewegung des Meniskus der Dosierflüssigkeit in der Pipettierspitze wird das herkömmliche Pipettieren von Dosierflüssigkeit nachfolgend als quasi-synchroner Betriebsmodus bezeichnet.

Beim herkömmlichen Dispensieren bei quasi-synchroner Bewegung von Kolben und Dosierflüssigkeit, kann der Abriss der zu dispensierenden Dosierflüssigkeit von der Pipettierspitze unter Ausnutzung von Trägheitskräften der Dosierflüssigkeit bewirkt werden. Der Kolben wird eine vorbestimmte Zeit in Dispensationsrichtung bewegt und dann, wenn ein Abriss von aus der Pipettierspitze hinaus verdrängter Dosierflüssigkeit gewünscht ist, möglichst schlagartig angehalten. Die Massenträgheit der bereits verdrängten Dosierflüssigkeit, die sich aufgrund der vorangegangenen Kolbenbewegung noch in der Dispensationsbewegung befindet, kann dann zum Abschnüren der Dosierflüssigkeit an der Pipettieröffnung und schließlich zum Abriss derselben führen. Der Zusammenhang zwischen Kolbenbewegung und unter Vermittlung des Arbeitsgases verdrängter Dosierflüssigkeit wird beim herkömmlichen Dispensieren üblicherweise empirisch für verschiedene Flüssigkeitsklassen ermittelt und ist in einem Datenspeicher der Pipettiervorrichtung gespeichert. Bei diesem quasi-synchronen Betriebsmodus übersteigt das von der dosierseitigen Kolbenfläche während der Bewegung des Kolbens in Pipettierrichtung überstrichene Volumen (allgemein Pipettiervolumen oder abhängig von der Bewegungsrichtung des Kolbens Aspirationsvolumen bzw. Dispensationsvolumen) das tatsächlich pipettierte Volumen der Dosierflüssigkeit in der Regel um nicht mehr als 5 %. Das Verhältnis von Pipettiervolumen zu tatsächlich pipettiertem Dosierflüssigkeitsvolumen ist folglich in der Regel nicht größer als 1,05.

Durch den trägheitsinduzierten Flüssigkeitsabriss an der Pipettieröffnung bleibt mitunter Dosierflüssigkeit unerwünschterweise außen an der Pipettierspitze im Bereich der Pipettieröffnung haften. Um zu vermeiden, dass diese anhaftende Flüssigkeitsmenge ganz oder teilweise unkontrolliert abtropft, wird der Kolben nach dem Flüssigkeitsabriss ein kleines Stück in Aspirationsrichtung bewegt, um die außen anhaftende Dosierflüssigkeit durch die Pipettieröffnung zurück in die Pipettierspitze zu saugen.

Diese Dispensation von Dosierflüssigkeit unter Ausnutzung von Trägheitskräften der Dispensation funktioniert abhängig von der jeweiligen Dosierflüssigkeit nicht mehr sicher für Einzel-Dosiervolumina von weniger als 3 bis 5 µl, da dann aufgrund der geringen Masse die erzielbaren Trägheitskräfte andere Krafteinflüsse, insbesondere aufgrund von Oberflächenspannung, nicht mehr ausreichend sicher überwinden können, um ein sicheres, wiederholbares Ablösen derart kleiner Dosierflüssigkeitsmengen gewährleisten zu können.

Von den vorliegend beschriebenen Pipettiervorrichtungen zu unterscheiden sind die sogenannten "Dispensierer" oder "Dispenser", die in der Regel Dosierflüssigkeiten ausschließlich dispensieren, jedoch nicht aspirieren können. Dispenser erhalten die zu dispensierende Dosierflüssigkeit in der Regel über Zuführkanäle aus einem Vorrat, welcher mit einem durch den Kolben veränderlichen Dosierraum des Dispensers in Strömungsverbindung steht.

Von den zuvor genannten Pipettiervorrichtungen weiter zu unterscheiden sind Pipettiervorrichtungen, bei welchen die dosierseitige Endfläche des Kolbens unmittelbar in Kontakt mit der zu pipettieren Dosierflüssigkeit steht. Es befindet sich dann zwischen dem Kolben und der Dosierflüssigkeit kein Arbeitsgas.

Wegen der unmittelbaren Bewegungskopplung von Kolben und Dosierflüssigkeit in derartigen arbeitsgasfreien Pipettiervorrichtungen bezeichnet man deren Pipettierart in der Fachwelt mit dem englischen Begriff "Positive Displacement". Das Weglassen von kompressiblem Arbeitsgas erhöht zwar die theoretisch erzielbare Pipettiergenauigkeit, führt jedoch in der Praxis zu Schwierigkeiten an anderer Stelle. Zum einen lässt sich ein Gaseinschluss im Pipettiervolumen beim Aspirieren nicht vollkommen sicher ausschließen, sodass auch beim Positive-Displacement-Pipettieren Gas- bzw. Luftblasen in der aspirierten Dosierflüssigkeit auftreten können, was sich dann wegen der Abweichung vom Sollzustand nachteilig auf die erreichbare Pipettiergenauigkeit auswirkt. Zum anderen ist die beim Positive-Displacement-Pipettieren erzielbare Pipettiergenauigkeit dann, wenn die Dosierflüssigkeit zur Schaumbildung neigt, äußerst gering. Außerdem muss wegen der Benetzung des Pipettierkolbens durch die Dosierflüssigkeit dann, wenn die zu pipettierende Dosierflüssigkeit gewechselt werden soll, nicht nur eine Pipettierspitze, sondern mit dieser auch der Pipettierkolben gewechselt werden, was einen erheblichen Montageaufwand und daraus folgend erhebliche Kosten bedeutet.

Im Gegensatz dazu wird die Pipettierart von gattungsgemäßen Pipettiervorrichtungen mit einem Arbeitsgas zwischen dem Kolben und der Dosierflüssigkeit in der Fachwelt als "Air Displacement" bezeichnet, wenngleich das Arbeitsgas nicht notwendigerweise Luft sein muss, sondern auch ein Inertgas oder ein quasi-inertes Gas, wie etwa Stickstoff, sein kann. Bei dieser Pipettierart ist der Pipettierkolben von der Dosierflüssigkeit durch eine Gas-, insbesondere durch eine Luftsäule dauerhaft und vollständig getrennt. Es besteht daher kein oder lediglich ein vernachlässigbares Kontaminationsrisiko.

Zu unterscheiden ist die vorliegende erfindungsgemäße Pipettiervorrichtung auch von solchen, die eine Säule einer Systemflüssigkeit als Kolben verwenden. Von derartigen Systemflüssigkeiten geht ein gewisses Maß an Kontaminationsrisiko aus, da bisweilen nicht ausgeschlossen werden kann, dass Systemflüssigkeit, also ein Teil eines gleichsam flüssigen Kolbens, in die zu pipettierende Dosierflüssigkeit gelangt. Der Kolben der Pipettiervorrichtung der vorliegenden Erfindung ist wenigstens abschnittsweise, zur Vermeidung eines Kontaminationsrisikos bevorzugt vollständig, als Festkörper ausgebildet. Bei nur abschnittsweiser Ausbildung als Festkörper ist wenigstens die zur Dosierflüssigkeit hinweisende dosierseitige Endfläche des Kolbens als Festkörper ausgebildet, um eine Übertragung von Flüssigkeit zu Flüssigkeit zu verhindern.

Beim impulsartigen Dispensieren von kleinen Dosierflüssigkeitsdosen können abhängig von der gewählten Dosierflüssigkeit, beispielsweise abhängig von deren Viskosität, Dichte oder/und Oberflächenspannung sowie weiter abhängig von den Parametern des Überdruckimpulses und gegebenenfalls des anschließenden Unterdruckimpulses unerwünschte Begleiterscheinungen auftreten. Beispielsweise kann statt lediglich eines einzigen gewünschten Dosiertropfens am abgebenden pipettieröffnungsnäheren Meniskus eine Vernebelung von Dosierflüssigkeit bzw. eine Abgabe von Dosierflüssigkeit durch einen von unerwünschten Satellitentröpfchen begleiteten Dosiertropfen auftreten, was mit einer unerwünschten Verminderung der erzielbaren Dosiermengengenauigkeit verbunden ist.

Als Dispensation im Sinne der vorliegenden Anmeldung wird daher die spritz- und vernebelungsfreie Abgabe der Dosierflüssigkeit in einem Tropfen verstanden.

Grundsätzlich kann die Pipettiervorrichtung einen fest installierten Pipettierkanal mit endseitig am Pipettierkanal ausgebildeter Pipettierspitze mit Pipettieröffnung aufweisen. Dies ist jedoch aus hygienischen Erwägungen weniger vorteilhaft. Bevorzugt ist die Pipettiervorrichtung dazu ausgebildet, wechselbare Pipettierspitzen lösbar an den Pipettierkanal anzukoppeln. Dementsprechend ist gemäß einer vorteilhaften Weiterbildung der vorliegenden Erfindung vorgesehen, dass die Pipettiervorrichtung eine vom Pipettierkanal durchsetzte Kopplungsformation zur vorübergehenden Ankopplung einer Pipettierspitze aufweist. Ist eine Pipettierspitze an die Kopplungsformation angekoppelt, verlängert die Pipettierspitze den vorrichtungseigenen Pipettierkanal und ist vorübergehend, also während der Dauer ihrer Ankopplung, Teil des Pipettierkanals der Pipettiervorrichtung. Die Pipettierspitze ist zur Verringerung von Kontaminationsrisiken vorzugsweise ein sogenanntes "disposable", also eine Einweg- bzw. Wegwerf-Pipettierspitze, welche nach einmaligem Dispensieren oder Aliquotieren entsorgt wird.

Bevorzugt ist die Pipettiervorrichtung nicht nur zur impulsartigen Dispensation ausgebildet, sondern auch zur herkömmlichen Aspiration, bei welcher die Dosierflüssigkeit im Aufnahmeraum sowie anfänglich in diesen hinein der Kolbenbewegung synchron oder quasi-synchron im oben erläuterten Sinn folgt. Dann kann die Bereitstellung von Dosierflüssigkeit in der Pipettiervorrichtung, insbesondere in einer daran aufgenommenen Pipettierspitze durch quasi-synchrone Aspiration von Dosierflüssigkeit durch die Pipettieröffnung der Pipettiervorrichtung hindurch in den Aufnahmeraum der Pipettiervorrichtung erfolgen.

Bevorzugt ist die Pipettiervorrichtung sowohl zur impulsartigen Dispensation im asynchronen Betrieb wie auch zur herkömmlichen Dispensation im quasi-synchronen Betrieb ausgebildet, so dass mit der erfindungsgemäßen Pipettiervorrichtung kleine Dosierflüssigkeitsmengen von weniger als 2 µl, etwa bis hinab zu einigen zehn Nanolitern, ebenso wie große Flüssigkeitsmengen von mehreren hundert Mikrolitern wiederholgenau dispensierbar sind. Die Umstellung zwischen asynchronem und quasi-synchronem Betrieb erfolgt durch entsprechende Ansteuerung des Pipettierkolben-Bewegungsantriebs durch die Steuervorrichtung. Die Steuervorrichtung kann überdies dazu ausgebildet sein, nur im impulsartigen Pipettierbetrieb die Ansteuerung des Bewegungsantriebs nach Maßgabe des von der Positionserfassungsvorrichtung ausgegebenen Positionssignals zu regeln. Im herkömmlichen Pipettierbetrieb kann die Steuervorrichtung wegen der engen Korrelation von vom Kolben überstrichenem Volumen zu dispensiertem oder aspiriertem Volumen den Bewegungsantrieb weiterhin positionsabhängig nach Maßgabe eines die Position des Pipettierkolbens anzeigenden Signals wenigstens eines Positionssensors ansteuern und so die Kolbenposition regeln. Zusätzlich oder alternativ kann die Steuervorrichtung im herkömmlichen Pipettierbetrieb den Bewegungsantrieb nach Maßgabe eines den Druck des Arbeitsgases repräsentierenden Drucksignals ansteuern. Bei ausreichend langsamer Kolbenbeschleunigung und Kolbenbewegung erfolgt die Dispensation, wie auch die Aspiration, quasi-synchron. Die durch die Steuervorrichtung am Bewegungsantrieb für eine gewünschte Kolbenbeschleunigung oder/und Kolbengeschwindigkeit einzustellenden Werte können ohne großen Aufwand für unterschiedliche Flüssigkeitsklassen durch Versuche ermittelt werden.

Beispielsweise kann die Steuereinrichtung zur Realisierung eines quasi-synchronen Pipettierbetriebs dazu ausgebildet sein, den Kolben zur Pipettierung eines vorbestimmten Einzel-Dosiervolumens von mehr als 2 µl mit einer Höchstgeschwindigkeit von nicht mehr als 1000 µl/s zu bewegen. Bei der angegebenen maximalen Geschwindigkeit des Kolbens von nicht mehr als 1000 µl/s folgt die Dosierflüssigkeit - gegebenenfalls mit geringem zeitlichen Versatz - in gleichgerichteter Bewegung dem Kolben. Das vom Kolben überstrichene Pipettiervolumen entspricht, wie oben dargelegt, im Wesentlichen dem tatsächlich pipettierten Dosierflüssigkeitsvolumen. Es gelten bevorzugt die in der vorliegenden Anmeldung unten genannten Kolbengrößen, angegeben durch die Kolbenfläche.

Mit der Möglichkeit, die erfindungsgemäße Pipettiervorrichtung sowohl im synchronen bzw. quasi-synchronen wie auch im asynchronen impulsartigen Pipettierbetrieb zu betreiben, kann ein und dieselbe erfindungsgemäße Pipettiervorrichtung dazu ausgebildet sein, ein auswählbares Einzel-Dosiervolumen in einem Dosiervolumenbereich von 100 nl bis 100 µl, vorzugsweise von 100 nl bis 1000 µl mit einer Volumenabweichung von nicht mehr als 2 % bezogen auf das vorbestimmte Einzel-Dosiervolumen als Nenn-Volumen reproduzierbar zu pipettieren. Somit ist die erfindungsgemäße Pipettiervorrichtung in der Lage, als maximales Pipettiervolumen das 10000-fache des minimalen Pipettiervolumens zu pipettieren. Dabei soll selbstverständlich nicht ausgeschlossen sein, dass beispielsweise die genannte Untergrenze von 100 nl noch unterschritten werden kann. Für die genannten Pipettiervolumen-Bereiche ist die Funktionalität der Pipettiervorrichtung jedenfalls gewährleistet.

Aus den genannten Gründen ist es vorteilhaft, wenn die Pipettiervorrichtung eine lösbare Pipettierspitze aufweist, mit einer Kopplungsgegenformation zum lösbaren Kopplungseingriff mit der Kopplungsformation und mit der Pipettieröffnung als Durchlassöffnung für Dosierflüssigkeit während eines Aspirationsvorgangs und während eines Dispensationsvorgangs. In diesem Falle ist die Dosierflüssigkeit, gegebenenfalls nach einem Aspirationsvorgang, in der Pipettierspitze bereitgestellt. Der Aspirationsvorgang erfolgt wegen der dabei aufgenommenen großen Dosierflüssigkeitsmenge bevorzugt nicht impulsartig, sondern als quasi-synchroner Aspirationsvorgang, d. h. die Erzeugung eines aspirierenden Unterdrucks im Arbeitsgas und ein dadurch bedingtes Einströmen von Dosierflüssigkeit durch die Pipettieröffnung hindurch in die Pipettiervorrichtung bzw. in die Pipettierspitze überlappen sich größtenteils zeitlich.

Einer der großen Vorteile der erfindungsgemäßen Pipettiervorrichtung ebenso wie des impulsartigen Dispensationsverfahrens liegt darin, dass eine standardmäßige Pipettierspitze verwendet werden kann mit einem Nenn-Pipettierraumvolumen, welches wesentlich größer ist als die bei einem einzigen impulsartigen Dispensationsvorgang abgegebene Dosierflüssigkeitsdosis. Bevorzugt ist das Nenn-Aufnahmevolumen bzw. Nenn-Pipettierraumvolumen der Pipettierspitze mehr als 80 mal, besonders bevorzugt mehr als 300 mal, höchst bevorzugt mehr als 500 mal so groß wie das minimal mögliche Volumen einer einzigen impulsartig dispensierten oder dispensierbaren Flüssigkeitsdosis. Dadurch können Aliquotiervorgänge mit zahlreichen aufeinanderfolgenden impulsartigen Dispensationen bei gleichzeitig sehr hoher Wiederholgenauigkeit des Dosisvolumens ohne zwischenzeitliches Aspirieren realisiert werden.

Beispielsweise wurde in einem Versuch eine Standard-Pipettierspitze mit einem Nenn-Aufnahmevolumen von 300 µl an eine Pipettiervorrichtung vorübergehend angekoppelt. In diese Pipettierspitze wurden 40 µl einer Dosierflüssigkeit synchron aspiriert, beispielsweise Glycerin. Zwischen dem pipettieröffnungsnäheren, abgebenden Meniskus und der Pipettieröffnung wurde ein Gasvolumen von 4 bis 5 µl vorgesehen - ein Gasvolumen, das für die erfindungsgemäße Pipettiervorrichtung allgemein vorteilhaft, aber nicht zwingend erforderlich ist. In dieser Konstellation wurde Glycerin als Dosierflüssigkeit mit einem Einzel-Dosiervolumen von 448 nl 20 mal hintereinander impulsartig aliquotiert, wobei sich die einzelnen abgegebenen Dosiervolumina um nicht mehr als 2,96 % unterschieden.

Die mehrfache Abgabe von Glycerin als vergleichsweise hochviskose Flüssigkeit mit einem reproduzierbaren Dosiervolumen von weniger als 450 nl aus einem in der Pipettiervorrichtung bereitgestellten Reservoir von 40 µl ist in höchstem Maße ungewöhnlich.

Konstruktiv ist die Erzielung impulsartiger Druckänderungen im Arbeitsgas dadurch in einfacher und hochgenauer Weise möglich, dass der Pipettierkolben ein magnetischer Kolben mit wenigstens einem Permanentmagneten ist und dass der Bewegungsantrieb elektrisch bestrombare Spulen aufweist. Die Steuervorrichtung kann dann dazu ausgebildet sein, die Versorgung der Spulen mit elektrischer Energie zu steuern. Der magnetische Kolben ist bevorzugt ein Festkörperkolben mit bevorzugt einer Mehrzahl von Festkörper-Permanentmagneten, welche wenigstens an ihrem der Pipettieröffnung näher gelegenen Längsende gegenüber dem den Kolben beweglich aufnehmenden Pipettierkanal ausreichend abgedichtet sind, beispielsweise durch eine entsprechende Kappe. Diese Kappe kann einen oder mehrere Festkörper-Permanentmagnete des Pipettierkolbens umgeben. Die Bereitstellung eines durch ein elektromagnetisches Feld in der Art eines Linearmotors antreibbaren magnetischen Kolbens ermöglicht hochdynamische peitschenhiebartiger Bewegungsvorgänge des Kolbens im Pipettierkanal und dadurch die Erzeugung zeitlich sehr kurzer Überdruckimpulse, welche durch ebenso zeitlich kurze Unterdruckimpulse in ihrer Wirkung schlagartig gestoppt werden können.

Die oben genannte Erzeugung eines Unterdrucks umfasst dann eine Verlagerung des magnetischen Kolbens in eine erste Richtung, in der Regel in eine Richtung weg von der Pipettieröffnung.

Ebenso umfasst die Erzeugung des Überdruckanteils im Druckimpuls eine Verlagerung des Kolbens in eine der ersten entgegengesetzte zweite Richtung.

Bevorzugt befindet sich zwischen dem Pipettierkolben und der im Pipettierkanal bereitgestellten Dosierflüssigkeitsmenge nur das Arbeitsgas und kein weiteres Systemfluid oder Dosierfluid.

Grundsätzlich kann bei Verwendung eines durch bestrombare Spulen linearmotorisch bewegbaren Pipettierkolbens mit wenigstens einem Permanentmagneten die Position des Pipettierkolbens im Pipettierkanal aufgrund der induktiven Rückwirkung des permanentmagnetischen Pipettierkolbens auf die Spulen durch den linearmotorischen Bewegungsantrieb selbst ermittelt werden. Somit kann der linearmotorische Bewegungsantrieb selbst die Positionserfassungsvorrichtung oder wenigstens ein Teil derselben sein. Zur möglichst hochauflösenden und damit besonders genauen Erfassung der Pipettierkolbenposition kann die Positionserfassungsvorrichtung zusätzlich oder alternativ wenigstens einen Positionssensor aufweisen, welcher zur Erfassung der Position des Pipettierkolbens und zur Ausgabe eines die erfasste Kolbenposition anzeigenden Positionssignals an die Steuervorrichtung ausgebildet ist. Wenn der Pipettierkolben ein permanentmagnetischer Kolben ist, kann bevorzugt eine Mehrzahl von Hallsensoren als Positionssensoren verwendet werden, welche längs des Pipettierkanals angeordnet sind. Es sind jedoch auch andere Positionssensoren einsetzbar.

Die Steuervorrichtung kann zur hochgenauen impulsartigen Veränderung des Drucks des Arbeitsgases während eines Pipettiervorgangs die Versorgung der Spulen mit elektrischer Energie in Form einer Regelung abhängig von einem erfassten aktuellen Zustand der Versorgung der Spulen mit elektrischer Energie und abhängig von dem Positionssignal der Positionserfassungsvorrichtung bzw. des wenigstens einen Positionssensors steuern.

Dabei ist die eingangs angegebene Pipettierkolbenbewegungsdauer von 35 ms nur eine Obergrenze. Die Dauer kann auch erheblich kürzer sein als 35 ms, etwa 15 ms, 10 ms, 5 ms, oder sogar nur 1 ms - abhängig von der gewünschten zu dosierenden Menge und abhängig von der Dosierflüssigkeit. Zur Erzielung der gewünschten hohen Dosiergenauigkeit in der erforderlich kurzen Zeit, die für eine impulsartige Veränderung des Drucks des Arbeitsgases zur Verfügung steht, umfasst die Steuervorrichtung gemäß einer besonders vorteilhaften Weiterbildung der vorliegenden Erfindung eine kaskadierte Regelkreisstruktur mit wenigstens zwei Regelkreisen. Die Steuervorrichtung kann dann dazu ausgebildet sein, in einem inneren Regelkreis der kaskadierten Regelkreisstruktur eine an den Spulen angelegte elektrische Spannung nach Maßgabe eines Unterschieds zwischen einem Soll-Stromwert und einem erfassten Stromwert eines in den Spulen fließenden Stroms einzustellen.

Die Steuervorrichtung kann dann weiter dazu ausgebildet sein, den Soll-Stromwert des in den Spulen fließenden Stroms in einem äußeren gelegenen Regelkreis der kaskadierten Regelkreisstruktur nach Maßgabe eines Unterschieds zwischen einem Soll-Positionswert und einem durch das Positionssignal angezeigten Ist-Positionswert des Pipettierkolbens einzustellen.

Durch die kaskadierte Regelung der Kolbenbewegung können überdies mehrere Störgrößen schnell und sicher kompensiert werden: der äußere Regelkreis, welcher einen Spulen-Soll-Stromwert nach Maßgabe eines Unterschieds zwischen Soll- und Ist-Position des Pipettierkolbens ermittelt, kann unvorhersagbare und für unterschiedliche Pipettiervorrichtungen und Betriebsvorgänge individuell verschiedene Reibungseinflüsse ausgleichen oder wenigstens verringern, etwa Reibung zwischen Kolbendichtung und Pipettierkanalzylinder.

Der innere Regelkreis, welcher einen Soll-Spannungswert nach Maßgabe eines Unterschieds zwischen Soll- und Ist-Stromwert des in den Spulen fließenden Stroms ermittelt, kann unvorhersagbare und für unterschiedliche Pipettiervorrichtungen und Betriebsvorgänge individuell verschiedene Schwankungen von Spulenwiderständen und Spuleninduktivitäten ausgleichen oder wenigstens verringern.

Zur hochgenauen und hochschnellen Veränderung des Arbeitsgasdrucks bei besonders kurzen Druckimpulsen, etwa im einstelligen Millisekundenbereich, - aber nicht nur dort - ist gemäß der vorliegenden Erfindung vorgesehen, dass die Steuervorrichtung einen Datenspeicher umfasst, in welchem für eine Vorsteuerung wenigstens ein vorbestimmter Pipettierkolben-Soll-Positionsverlauf gespeichert ist. Zusätzlich kann zur weiteren Erhöhung der Dosiergenauigkeit in dem Datenspeicher für eine Vorsteuerung ein den vorbestimmten Pipettierkolben-Soll-Positionsverlauf bewirkender vorbestimmter Spulen-Soll-Stromverlauf gespeichert sein.

Bevorzugt ist die Steuereinrichtung zur Vorsteuerung der Regelkreise in der kaskadierten Regelkreisstruktur nach Maßgabe der Pipettierkolben-Soll-Position und des Soll-Spulenstroms ausgebildet. Die vorbestimmten Verläufe können für unterschiedliche Flüssigkeiten oder Flüssigkeitsklassen empirisch ermittelt werden. Als Verlauf gilt eine zeitliche Abfolge von wenigstens drei Parameterwerten. Anstelle absoluter Parameterwerte kann der Verlauf auch Unterschiedswerte (Delta-Werte) zu jenen Parameterwerten enthalten, die für einen Bezugszustand, beispielsweise einer Standardatmosphäre (etwa 20 °C bei einem Atmosphärendruck von 1013,25 hPa), gelten. Dadurch können die vorbestimmten Verläufe meteorologisch kompensiert sein.

Ein vorbestimmter Verlauf kann zusätzlich oder alternativ auch in Form einer mathematischen Funktion oder Funktionenschar gespeichert sein. Bevorzugt kann ein nicht unmittelbar empirisch ermittelter Wert ausgehend von der Funktion durch Interpolation oder Extrapolation erhalten werden.

In dem Datenspeicher ist erfindungsgemäß, wie oben bereits dargestellt, eine Mehrzahl von vorbestimmten Pipettierkolben-Soll-Positionsverläufen gespeichert. Aus diesen ist abhängig wenigstens von der Dosierflüssigkeit und der zu pipettierenden Flüssigkeitsmenge ein Pipettierkolben-Soll-Positionsverlauf als für den jeweiligen Pipettiervorgang aktiver vorbestimmter Pipettierkolben-Soll-Positionsverlauf auswählbar. Die Auswahl kann durch manuelle Eingabe oder durch Datenübertragung zwischen vernetzten Laborgeräten erfolgen. Sie kann hinsichtlich der Dosierflüssigkeit automatisch durch die Pipettiervorrichtung und durch deren Steuervorrichtung erfolgen, etwa weil die Pipettiervorrichtung dazu ausgebildet ist, die Dosierflüssigkeit oder Dosierflüssigkeitsklasse selbständig zu erkennen. Dies kann in einem einfachen Fall durch Lesen einer entsprechenden Kodierung erfolgen, wie einem Barcode, oder eine Analysedosierung zur Erkennung von Dosierflüssigkeiten oder Dosierflüssigkeitsklassen, erforderlichenfalls unter Verwendung weiterer Sensoren.

Aufgrund der bei der impulsartigen Pipettierung einschlägigen physikalischen Effekte wird die Pipettierspitze bei einer impulsartigen Dispensation nicht vollständig entleert. Es verbleibt Dosierflüssigkeit auch nach dem impulsartigen Dispensationsvorgang im Aufnahmeraum der Pipettierspitze. Bevorzugt erfolgt daher eine impulsartige Dispensation von Dosierflüssigkeit aus einer im Aufnahmeraum der Pipettierspitze aufgenommenen Dosierflüssigkeitsmenge, deren Volumen um wenigstens das Fünffache größer ist als das Volumen der impulsartig zu dispensierenden Dosierflüssigkeit.

Die Pipettiervorrichtung ist zur impulsartigen Dispensation im Jet-Modus ausgebildet, in welchem das dispensierte Flüssigkeitsvolumen zwischen der abgebenden Dosierflüssigkeitsmenge in der Pipettierspitze und einem Dispensationsziel eine Strecke im freien Flug zurücklegt.

Die für eine impulsartige Pipettierung typische peitschenartige Bewegbarkeit des Kolbens wird bevorzugt dadurch realisiert, dass die Steuereinrichtung dazu ausgebildet ist, zur Dispensation eines vorbestimmten Einzel-Dosiervolumens von weniger als 2 µl den Bewegungsantrieb derart zu betreiben, dass der Kolben in Dispensationsrichtung bewegt wird und dabei seine dosierseitige Endfläche ein Dispensationsvolumen überstreicht, welches um nicht weniger als das 1,4-fache größer als das Einzel-Dosiervolumen ist, und dass der Kolben anschließend in einer der Dispensationsrichtung entgegengesetzten Aspirationsrichtung bewegt wird und dabei seine dosierseitige Endfläche ein Aspirationsvolumen überstreicht, wobei die Bewegung des Pipettierkolbens insgesamt nicht länger als 35 ms, vorzugsweise nicht länger als 25 ms dauert.

Die Bewegung des Kolbens kann anhand eines beliebigen Bezugspunktes am Kolben erfasst werden, etwa anhand der dosierseitigen Kolbenfläche.

Die Wirkung des erfindungsgemäß vorgeschlagenen Bewegungsablaufs des Kolbens auf die Dosierflüssigkeit ist noch nicht vollständig geklärt. Ein Erklärungsmodell geht jedoch davon aus, dass mit der impulsartigen Bewegung des Kolbens in Pipettierrichtung, vorzugsweise Dispensationsrichtung, um mehr als das zu pipettierende vorbestimmte Einzel-Dosiervolumen die Anregungs- oder Losbrech-Energie auf die zu pipettierende Dosierflüssigkeit übertragen wird, die notwendig ist, um gegen Trägheitskräfte, Oberflächenspannung, Adhäsion und Kohäsion der Dosierflüssigkeit deren Bewegung in die gewünschte Dispensationsrichtung einzuleiten.

Mit der Bewegung des Kolbens in die der Pipettierrichtung, vorzugsweise Dispensationsrichtung, entgegengesetzten Gegenpipettierrichtung, vorzugsweise Aspirationsrichtung, bei welcher der Kolben erneut ein Volumen, in der Regel ein anderes, vorzugsweise wiederum größeres Volumen als das eigentlich zu pipettierende Einzel-Dosiervolumen, überstreicht, wird die zuvor angeregte Pipettierbewegung, vorzugsweise Dispensationsbewegung, der Dosierflüssigkeit wieder "entregt". Abhängig vom Ausmaß der notwendigen Entregung reichen oben genannten zwei Bewegungsphasen aus oder es werden drei Bewegungsphasen benötigt.

Es wird somit ein sehr kurzer, scharfer Druckimpuls durch Bewegung des Pipettierkolbens gemäß einem vorgegebenen Verlauf von Pipettierkolben-Positionen über die Pipettierzeit vom Kolben über das Arbeitsgas auf die Dosierflüssigkeit übertragen. Wie exakt der Pipettierkolben-Ist-Positionsverlauf dem Pipettierkolben-Soll-Positionsverlauf folgt, hängt von der Güte der Regelung ab. Gute Ergebnisse wurden hierbei selbst für kurze Druckimpulse mit der oben genannten kaskadierten Regelung auf Grundlage mehrerer Parameter, bevorzugt mit Vorsteuerung der Parameter, erzielt.

Überraschenderweise können die vom Kolben bei seiner Bewegung überstrichenen Volumina: Dispensationsvolumen und Aspirationsvolumen, gleich groß sein. Der Kolben kann sich daher am Ende des Dispensationsvorgangs wieder in der Startstellung befinden. Trotzdem wird ein Einzel-Dosiervolumen pipettiert.

Es kommt gemäß der vorliegenden Erfindung daher nicht auf ein "Verlagerungssaldo" des Kolbens an. Versuche haben vielmehr gezeigt, dass das tatsächlich dispensierte Dosierflüssigkeitsvolumen von der nach der Zeit integrierten Kolben-Soll-bewegung abhängt.

Das vom Kolben, bzw. von seiner dosierseitigen Endfläche, überstrichene Volumen ist dabei unter der vernünftigen Annahme, dass sich die Gestalt der Endfläche während des Pipettierens nicht ändert, der Flächeninhalt der Projektion der dosierseitigen Endfläche des Pipettierkolbens auf eine zur Kanalbahn orthogonale Projektionsebene multipliziert mit dem Kolbenhub.

Mit "Dispensationsrichtung" ist eine Bewegungsrichtung des Kolbens bezeichnet, welche ein Ausschieben von Dosierflüssigkeit aus dem Dosierflüssigkeits-Aufnahmeraum der Pipettierspitze bewirkt. Mit "Aspirationsrichtung" ist eine Bewegungsrichtung des Kolbens bezeichnet, welche ein Einsaugen von Dosierflüssigkeit in den Dosierflüssigkeits-Aufnahmeraum der Pipettierspitze bewirkt.

Ein Einzel-Dosiervolumen ist im Sinne der vorliegenden Anmeldung immer dann vorbestimmt, wenn der Dispensationsvorgang mit dem Ziel ein konkretes bekanntes Dosiervolumen zu dispensieren, abläuft. Das Einzel-Dosiervolumen kann durch manuelle Eingabe an der Pipettiervorrichtung oder durch Datenübertragung an die Pipettiervorrichtung oder durch Berechnung aus manuell eingegebenen oder/und aus in einer Speichervorrichtung hinterlegten Daten für die Pipettiervorrichtung vorbestimmt sein.

Das von der dosierseitigen Endfläche des Kolbens zunächst überstrichene Dispensationsvolumen kann nicht nur von dem vorbestimmten Einzel-Dosiervolumen, sondern zusätzlich von Parametern der jeweils zu pipettierenden Dosierflüssigkeit oder/und von dem Volumen des Arbeitsgases zwischen dosierseitiger Kolbenfläche und Dosierflüssigkeit abhängen. Grundsätzlich gilt: je größer die Viskosität der Dosierflüssigkeit (gemessen bei Raumtemperatur von 20 °C bei einem Atmosphärendruck von 1013,25 hPa mittels eines Rotationsviskosimeters) ist, desto größer ist das Verhältnis von Dispensationsvolumen zu Einzeldosiervolumen. Ebenso gilt: je größer das Volumen des Arbeitsgases ist, desto größer ist das Verhältnis von Dispensationsvolumen zu Einzeldosiervolumen. Bei den bevorzugten wechselbaren Pipettierspitzen kann üblicherweise ein bauartbedingtes Arbeitsgasvolumen zwischen Kolben und Dosierflüssigkeit von 100 µl nicht unterschritten und von 3000 µl nicht überschritten werden. Bevorzugt liegt das Arbeitsgasvolumen zwischen 180 µl und 1000 µl, besonders bevorzugt zwischen 200 µl und 800 µl.

So kann beispielsweise das Dispensationsvolumen nicht weniger als das 1,4-fache des Einzeldosiervolumens betragen. Es kann jedoch auch deutlich größer als das 1,4-fache des Einzeldosiervolumens sein. So kann es beispielsweise das Fünffache des Einzeldosiervolumens betragen, wenn eine niedrige Anregungsenergie ausreicht, die Dosierflüssigkeit zum Fließen durch die in der Regel enge Pipettieröffnung zu beschleunigen. Weniger gut zur Bewegung anregbare Dosierflüssigkeiten können mit einer Kolbenbewegung in Dispensationsrichtung und einem dabei von der dosierseitigen Endfläche überstrichenen Dispensationsvolumen von nicht weniger als dem Zehnfachen des Einzel-Dosiervolumens zur Bewegung angeregt werden. Da die Kolbenbewegung bevorzugt mit hoher maximaler Volumengeschwindigkeit als dem pro Zeiteinheit von der dosierseitigen Endfläche überstrichenen Volumen ausgeführt wird, steigt mit zunehmendem Dispensationsvolumen die Wiederholgenauigkeit der Pipettierung sehr kleiner Einzel-Dosiervolumina von weniger als 2 µl. Daher kann das Dispensationsvolumen bevorzugt nicht weniger als das Fünfundzwanzigfache des Einzel-Dosiervolumens betragen.

Versuche haben gezeigt, dass besonders für die häufig zu pipettierende Klasse von wässrigen Flüssigkeiten - das sind im Sinne der vorliegenden Anmeldung Flüssigkeiten mit einer Viskosität im Bereich von 0,8 bis 10 mPas, gemessen bei Raumtemperatur von 20 °C bei einem Atmosphärendruck von 1013,25 hPa mittels eines Rotationsviskosimeters - ein Dispensationsvolumen von zwischen dem Zehnfachen und dem Sechzigfachen, bevorzugt von zwischen dem Zehnfachen und dem Fünfundzwanzigfachen, des Einzel-Dosiervolumens zu hervorragenden Dosierergebnissen führt. Ein Dispensationsvolumen von zwischen dem Zehnfachen und dem Fünfundzwanzigfachen des Einzel-Dosiervolumens liefert auch für Dosierflüssigkeiten außerhalb des oben genannten Viskositätsbereichs hervorragende Dosierergebnisse.

Eine Obergrenze des Dispensationsvolumens stellt ein Dispensationsvolumen dar, bei welchem aufgrund der großen Zeitdauer, die der Kolben benötigt, um mit seiner dosierseitigen Endfläche das Dispensationsvolumen zu überstreichen, mehr als das Einzel-Dosiervolumen durch die Pipettieröffnung hindurch bewegt wird. Tests haben gezeigt, dass Dispensationsvolumina mit mehr als dem 500-fachen des Einzel-Dosiervolumens kein sinnvolles Dispensieren mehr von Dosiervolumina mit weniger als 2 µl gestatten.

Der Betrag der maximalen Druckdifferenz zwischen dem Arbeitsgasdruck während der Phase des Überdruckanteils und dem Bezugsdruck unmittelbar vor Einsetzen der Pipettierkolbenbewegung im Rahmen eines Pipettiervorgangs ist vorzugsweise kleiner als 50.000 Pa, besonders bevorzugt kleiner als 25.000 Pa und höchst bevorzugt kleiner als 10.000 Pa. Diese Werte gelten für eine Vielzahl von unterschiedlichen Flüssigkeiten und Flüssigkeitskassen. Für die besonders relevante Klasse der wässrigen Flüssigkeiten, wie sie in dieser Anmeldung definiert ist, ist der Betrag der maximalen Druckdifferenz zwischen dem Arbeitsgasdruck in der Überdruckphase und dem Bezugsdruck bevorzugt kleiner als 2.200 Pa und besonders bevorzugt keiner als 1.800 Pa.

Bevorzugt ist der Betrag der maximalen Druckdifferenz zwischen dem Arbeitsgasdruck in der Phase des Überdruckanteils und dem Bezugsdruck größer als 500 Pa, vorzugsweise größer als 600 Pa.

Der Betrag der maximalen Druckdifferenz zwischen dem Arbeitsgasdrucks während der Phase des Unterdruckanteils und dem Bezugsdruck unmittelbar vor Beginn der Pipettierkolbenbewegung im Rahmen des Pipettiervorgangs ist vorzugsweise kleiner als 30.000 Pa, besonders bevorzugt kleiner als 15.000 Pa und höchst bevorzugt kleiner als 7.500 Pa.

Bevorzugt ist der Betrag der maximalen Druckdifferenz zwischen dem Arbeitsgasdrucks während der Phase des Unterdruckanteils und dem Bezugsdruck größer als 200 Pa, vorzugsweise größer als 400 Pa.

Die während eines dispensierenden Druckimpulses auftretenden maximalen Druckdifferenzwerte bezüglich des Bezugsdrucks, von welchem der Druckimpuls ausgeht, hängt von einer noch nicht abschließend bestimmten Mehrzahl von Parametern ab, wie z. B. dem zu dispensierenden Einzel-Dosiervolumen, und der Flüssigkeit, welche durch Dichte, Viskosität und Oberflächenspannung charakterisierbar ist. Es zeichnet sich beispielsweise ab, dass für ein und dieselbe Flüssigkeit sowohl der Betrag der maximalen Druckdifferenz zum Bezugsdruck in der Überdruckphase als auch der Betrag der maximalen Druckdifferenz zum Bezugsdruck in der Unterdruckphase mit zunehmendem Einzel-Dosiervolumen abnehmen.

Es sei an dieser Stelle klargestellt, dass die erfindungsgemäß ausgebildete Pipettiervorrichtung trotz der zuvor beschriebenen großen Kolbenbewegung beim Dispensieren nur das vorbestimmte Einzel-Dosiervolumen an Dosierflüssigkeit durch ihre Pipettieröffnung hindurch bewegt. Es findet keine Überdosierung bzw. Überdispensation mit anschließender Korrektur in Aspirationsrichtung statt. Dosierflüssigkeit wird während eines Dispensationsvorgangs erfindungsgemäß nur in die gewünschte Dispensationsrichtung bewegt. Ein Dispensationsvorgang im Sinne der vorliegenden Anmeldung ist abgeschlossen, wenn die Kolbenbewegung endet.

Das vom Kolben während seiner Bewegung überstrichene Aspirationsvolumen kann sogar beim Aliquotieren gleich dem Dispensationsvolumen sein. Allerdings kann dann mit zunehmender Anzahl von Dispensationsvorgängen im Aliquotierbetrieb der pipettieröffnungsnähere Meniskus immer weiter in einen Dosierflüssigkeitsaufnahmeraum der Pipettiervorrichtung wandern, was die Genauigkeit weiterer Dispensationsvorgänge beeinträchtigen kann.

Daher kann beim Dispensieren das Aspirationsvolumen um das Einzel-Dosiervolumen kleiner sein als das Dispensationsvolumen oder es kann auf eine Kolbenbewegung in Aspirationsrichtung eine korrigierende Kolbenbewegung in Dispensationsrichtung folgen, etwa als die oben genannte dritte Bewegungsphase. Diese dritte Bewegungsphase ist dann die zeitlich kürzeste der drei genannten Bewegungsphasen. Somit kann sichergestellt werden, dass der pipettieröffnungsnähere Meniskus der aufgenommenen Dosierflüssigkeit trotz mehrerer durchgeführter Dispensationsvorgänge an einem möglichst konstanten Ort verbleibt. Auch das Aspirationsvolumen kann somit gemäß der zuvor gemachten Angaben wesentlich größer als das Einzel-Dosiervolumen sein.

Das für einen Dispensationsvorgang zur Dispensation kleiner Dosierflüssigkeitsmengen korrekte vom Kolben zu überstreichende Dispensations- und Aspirationsvolumen kann bei vorgegebenem Einzel-Dosiervolumen für eine Dosierflüssigkeit einfach durch Versuche ermittelt werden.

Bei dem vorliegend beschriebenen asynchronen Pipettierbetrieb können in ein und demselben Zeitpunkt bzw. in ein und derselben Zeitspanne zueinander entgegengesetzt gerichtete Bewegungen von Kolben einerseits und Dosierflüssigkeit andererseits auftreten. Ebenso kann eine Bewegung von Dosierflüssigkeit durch die Pipettieröffnung sogar erst einsetzen, nachdem der Kolben seine Bewegung abgeschlossen hat und wieder zum Stillstand gekommen ist. Die erfindungsgemäße Pipettiervorrichtung ist jedoch aufgrund ihrer bevorzugten Bauart mit permanentmagnetischem, linearmotorisch antreibbarem Kolben zusätzlich auch zum herkömmlichen quasi-synchronen Dispensationsbetrieb und zum herkömmlichen quasi-synchronen Aspirationsbetrieb ausgebildet.

Unabhängig davon, wann bei einem impulsartigen Dispensationsvorgang das Einzel-Dosiervolumen an Dosierflüssigkeit sich durch die Pipettieröffnung hindurchzubewegen beginnt, ist jedoch den meisten impulsartigen Dispensationsvorgängen gemein, dass der Kolben zur Bewegungsrichtungsumkehr angesteuert wird und in der Regel die Bewegungsrichtung des Kolbens tatsächlich umgekehrt wird, bevor sich das vorbestimmte Flüssigkeitsvolumen von der Pipettieröffnung abgelöst hat.

Folglich kann die peitschenartige Bewegbarkeit des Kolbens zur impulsartigen Pipettierung dadurch bewirkt werden, dass der Bewegungsantrieb einen Linearmotor umfasst und dass die Steuereinrichtung und der Bewegungsantrieb zur Pipettierung eines vorbestimmten Einzel-Dosiervolumens von weniger als 2 µl dazu ausgebildet sind, den Kolben mit einer Spitzengeschwindigkeit von wenigstens 5000 µl/s, bevorzugt von wenigstens 10000 µl/s, und von nicht mehr als 25000 µl/s zu bewegen.

Die Volumengeschwindigkeit des Kolbens, also das von der dosierseitigen Endfläche des Kolbens pro Zeiteinheit überstrichene Volumen, ist für das impulsartige Pipettieren von größerer Bedeutung als die lineare Bewegungsgeschwindigkeit des Kolbens oder einer Kolbenstange. Zwar reicht bei Kolben mit größerer Kolbenfläche ein geringerer Hub aus, um das gleiche Volumen zu überstreichen, für das ein Kolben mit geringerer Kolbenfläche einen größeren Hub benötigt. Somit könnte zur Realisierung zunehmender Volumengeschwindigkeiten einfach ein Kolben mit größerer Kolbenfläche längs der Kanalbahn bewegt werden als ein Kolben mit kleinerer Kolbenfläche. Allerdings steigt die für eine Bewegungseinleitung des Kolbens notwendige Losbrech-Kraft, etwa zur Überwindung der Haftreibung, mit der Kolbengröße erheblich an, sodass Kolben mit zunehmend großer Kolbenfläche für die Dispensation von Einzel-Dosiervolumina von weniger als 2 µl zunehmend schlechter steuerbar sind.

Die vorliegende Erfindung betrifft bevorzugt Pipettiervorrichtungen, deren Kolben eine Kolbenfläche von zwischen 3 und 80 mm² aufweisen, also welche bei kreisförmiger Kolbenfläche einen Durchmesser von zwischen 2 und etwa 10 mm aufweisen. Um mehrere Pipettierkanäle in einem zeilen- und spaltenförmigen Raster mit möglichst geringer Rasterweite anordnen zu können, betrifft die vorliegende Erfindung besonders bevorzugt Pipettiervorrichtungen, deren Kolben eine Kolbenfläche von zwischen 3 und 20 mm² aufweisen, was bei kreisförmiger Kolbenfläche einem Durchmesser von zwischen 2 und etwa 5 mm entspricht.

Bevorzugt weist die Pipettiervorrichtung eine Mehrzahl von Pipettierkanälen auf, von welchen in jedem ein wie oben beschrieben ausgebildeter Pipettierkolben längs der Pipettierkanalachse bewegbar aufgenommen ist. Weiter kann jeder Pipettierkanal je eine von der Steuervorrichtung bestrombare Spulenanordnung aufweisen, die mit dem magnetischen Pipettierkolben einen Linearmotor zum Antrieb des Pipettierkolbens bildet.

Beim Dispensieren mit zu hohen maximalen Kolbengeschwindigkeiten von beispielsweise mehr als 25000 µl/s kommt es zwar immer noch zu einer Flüssigkeitsbewegung aus einem Dosierflüssigkeits-Aufnahmeraum hinaus, jedoch wird dann das Einzel-Dosiervolumen in der Regel in mehrere Teilvolumina zersprengt (Satellitentröpfchen) oder zerstäubt abgegeben, was für hochgenaues Dispensieren der hier diskutierten kleinen Einzel-Dosiervolumina von weniger als 2 µl inakzeptabel ist.

Grundsätzlich kann festgestellt werden, dass mit zunehmender Kolbengeschwindigkeit oder/und Kolbenbeschleunigung die Neigung steigt, die vorbestimmte Dosierflüssigkeitsmenge unerwünschterweise in mehreren Teilmengen zu pipettieren. Nach derzeitigem Kenntnisstand werden zumindest für wässrige Dosierflüssigkeiten, wie sie oben definiert sind, bei maximalen Kolbengeschwindigkeiten von etwa 10.000 µl/s hinsichtlich Genauigkeit und Wiederholbarkeit der pipettierten Flüssigkeitsmenge ganz hervorragende Ergebnisse erzielt. Eine bevorzugte maximale Kolbengeschwindigkeit während eines impulsartigen Pipettiervorgangs liegt daher im Bereich von 7.000 bis 13.000 µl/s.

Um einen Eindruck von der Kolbengeschwindigkeit zu geben: Bevorzugt benötigt der Kolben für seine Bewegung in Dispensationsrichtung und anschließend in Aspirationsrichtung von dem Ort der Halbwegsweite, das ist die halbe Strecke zwischen dem Ausgangsort des Pipettierkolbens und seinem ersten Umkehr-Totpunkt bei einer peitschenartigen Pipettierbewegung zur Erzeugung eines Druckimpulses im Arbeitsgas, bis zum erneuten Erreichen dieser Halbwegsweite weniger als 18 ms. Es sind sogar Bewegungszeiten im einstelligen Millisekundenbereich realisierbar.

Eine vollständige Kolbenbewegung in Dispensations- und Aspirationsrichtung, mit welcher ein Einzel-Dosiervolumen von 950 nl einer wässrigen Dosierflüssigkeit bei einem von der dosierseitigen Endfläche überstrichenen Dispensationsvolumen von 30 µl und einem überstrichenen Aspirationsvolumen von 29,05 µl kann mit einem Kolben mit kreisförmiger Kolbenfläche und einem Durchmesser von 4,3 mm problemlos in etwa 15 ms ablaufen.

Der kinematische Aspekt der peitschenartigen Kolbenbewegung beruht jedoch nicht nur auf der erzielbaren maximalen Kolbengeschwindigkeit, sondern auch auf der Zeitspanne, die der Bewegungsantrieb benötigt, den Kolben auf die gewünschte Kolbengeschwindigkeit zu beschleunigen oder/und ausgehend von der gewünschten Kolbengeschwindigkeit abzubremsen. Bevorzugt sind daher die Steuereinrichtung und der Bewegungsantrieb dazu ausgebildet, den Kolben mit einer Beschleunigung von wenigstens 2 × 10⁶ µl/s², bevorzugt von wenigstens 6 × 10⁶ µl/s² besonders bevorzugt sogar von wenigstens 8 × 10⁶ µl/s² und von nicht mehr als 1 × 10⁸ µl/s² zur Bewegung längs der Kanalbahn zu beschleunigen oder/und zu verzögern. Es gelten die oben gemachten Angaben zur bevorzugten Kolbengröße, angegeben als Kolbenfläche.

Völlig überraschend hat sich weiter gezeigt, dass das Pipettieren von Dosierflüssigkeiten, insbesondere von wässrigen Dosierflüssigkeiten, mit den hier vorgeschlagenen erfindungsgemäßen Pipettiervorrichtungen unabhängig von der jeweils verwendeten Pipettierspitze ist. Mit gleichen Pipettierparametern kann für ein und dieselbe Dosierflüssigkeit an ein und derselben Pipettiervorrichtung mit unterschiedlichen Pipettierspitzen stets das gleiche Pipettierergebnis wiederholbar erzielt werden. Insbesondere ist das Pipettierergebnis unabhängig von dem Nenn-Aufnahmeraumvolumen der jeweils an die Pipettiervorrichtung angekoppelten Pipettierspitze. Das mit einem Satz von Pipettierparametern erzielbare Pipettierergebnis ist umso besser zwischen Pipettierspitzen mit unterschiedlichem Nenn-Aufnahmeraumvolumen übertragen werden, wenn die Pipettierspitzen gleiche Pipettieröffnungen und gleiche Totvolumina aufweisen.

Die vorliegende Erfindung wird nachfolgend anhand der beiliegenden Zeichnungen näher erläutert werden. Es stellt dar:
- Figur 1: eine erfindungsgemäße Pipettiervorrichtung, in welcher ein erfindungsgemäßes impulsartiges Dispensationsverfahren abläuft, unmittelbar nach der Aspiration einer vorbestimmten Menge an Dosierflüssigkeit,
- Figur 2a: die Pipettiervorrichtung von Figur 1 nach Erzeugung eines ersten Unterdrucks im Arbeitsgas bezogen auf einen Haltebezugsdruck von Fig. 1, zur Bildung eines Gasvolumens zwischen Pipettieröffnung und aspirierter Dosierflüssigkeit,
- Figur 2b: die Pipettiervorrichtung der Figur 2a nach Erhöhung des Drucks des Arbeitsgases zwischen Pipettierkolben und aspirierter Dosierflüssigkeit, zur Verlagerung des pipettieröffnungsnäheren Meniskus zur Pipettieröffnung hin,
- Figur 2c: die Pipettiervorrichtung der Figur 2b nach Erzeugung eines zweiten Unterdrucks im Arbeitsgas bezogen auf den Haltebezugsdruck von Fig. 1, zur Bildung eines Gasvolumens zwischen Pipettieröffnung und aspirierter Dosierflüssigkeit,
- Figur 3a: die Pipettiervorrichtung von Figur 2c, die nur der Übersichtlichkeit halber auf dem dritten Figurenblatt wiederholt dargestellt ist,
- Figur 3b: die Pipettiervorrichtung von Figur 3a während der schlagartigen Erzeugung eines Druckimpulses,
- Figur 3c: die Pipettiervorrichtung von Figur 3b nach Vollendung der peitschenartigen Kolbenbewegung zur Dispensation eines Einzel-Dosiervolumens von 500 nl,
- Fig. 4: ein grobschematischer Verlauf des vom Pipettierkolben überstrichenen Volumens bei der impulsartigen beispielhaften Dispensation von etwa 1 µl Dosierflüssigkeit,
- Fig. 5: eine beispielhafte Regelungsstruktur, wie sie die Steuervorrichtung der erfindungsgemäßen Pipettiervorrichtung zur Steuerung der Bewegung des Pipettierkolbens abhängig von einer erfassten Position des Pipettierkolbens verwendet,
- Fig. 6: ein beispielhaftes Diagramm eines Pipettierkolben-Soll-Positionsverlaufs und eines Pipettierkolben-Ist-Positionsverlaufs für eine impulsartige Dispensation eines Dosierflüssigkeitsvolumens von 500 nl,
- Fig. 7: ein beispielhaftes Diagramm eines Pipettierkolben-Soll-Positionsverlaufs und eines Pipettierkolben-Ist-Positionsverlaufs für eine impulsartige Dispensation eines Dosierflüssigkeitsvolumens von 1 µl und
- Fig. 8: ein beispielhaftes Diagramm eines Pipettierkolben-Soll-Positionsverlaufs und eines Pipettierkolben-Ist-Positionsverlaufs für eine impulsartige Dispensation eines Dosierflüssigkeitsvolumens von 1,5 µl.

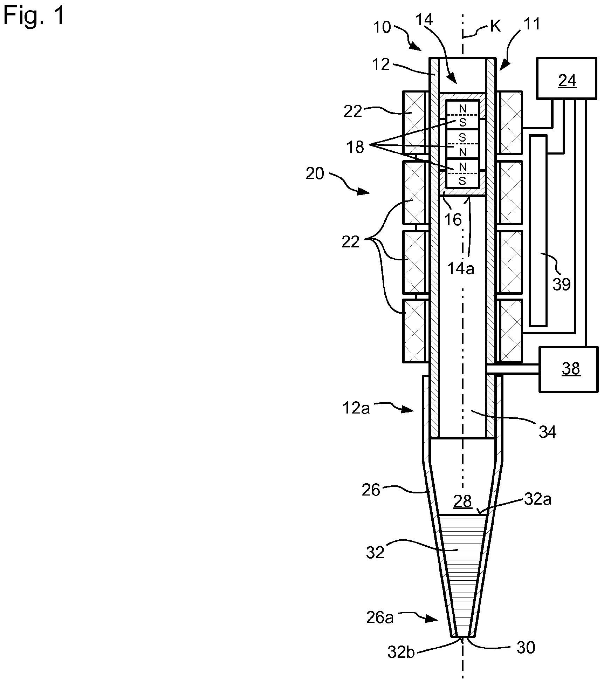

In den Figuren 1 bis 3c ist eine erfindungsgemäße Pipettiervorrichtung allgemein mit 10 bezeichnet. Diese umfasst einen Pipettierkanal 11, umfassend einen Zylinder 12, welcher sich längs einer als geradlinige Kanalachse ausgestalteten Kanalbahn K erstreckt. In diesem Pipettierkanal 11 ist ein Pipettierkolben oder auch kurz Kolben 14 längs der Kanalbahn K beweglich aufgenommen.

Der Kolben 14 umfasst zwei Endkappen 16 (aus Gründen der Übersichtlichkeit ist nur die untere in den Figuren 1 bis 3c mit Bezugszeichen versehen), zwischen welchen eine Mehrzahl von Permanentmagneten 18 (im vorliegenden Beispiel drei Permanentmagnete 18) aufgenommen sind. Die Permanentmagnete 18 sind zur Erzielung eines längs der Kanalbahn K trennscharfen Magnetfelds längs der Kanalachse K polarisiert und paarweise mit aufeinander zuweisenden gleichnamigen Polen angeordnet. Aus dieser Anordnung resultiert ein vom Kolben 14 ausgehendes Magnetfeld, welches um die Kanalachse K weitestgehend gleichförmig, also im Wesentlichen rotationssymmetrisch bezüglich der Kanalachse K ist und welches längs der Kanalachse K einen hohen Gradienten der magnetischen Feldstärke aufweist, sodass sich ungleichnamige Polarisierungszonen trennscharf längs der Kanalbahn K alternierend abwechseln. Damit kann beispielsweise durch Hall-Sensoren einer Positionssensoranordnung 39 eine hohe Positionsauflösung bei der Positionserfassung des Kolbens 14 längs der Kanalachse K erreicht werden und es kann eine sehr effiziente Ankopplung eines äußeren Magnetfelds an den Kolben 14 erreicht werden.

Die Endkappen 16 sind bevorzugt aus reibungsarmem, Graphit oder Glimmer umfassenden Material gebildet, wie es beispielsweise von kommerziell erhältlichen Kappen der Fa. Airpot Corporation in Norwalk, Connecticut, (US) bekannt ist. Um die von diesem Material bereitgestellte geringe Reibung möglichst vollständig ausschöpfen zu können, umfasst der Pipettierkanal 11 bevorzugt einen Zylinder 12 aus Glas, so dass bei einer Bewegung des Kolbens 14 längs der Kanalachse K das Graphit oder Glimmer umfassende Material äußerst reibungsarm an einer Glasfläche gleitet.

Der Kolben 14 bildet somit einen Läufer eines Linearmotors 20, dessen Stator von den Pipettierkanal 11 umgebenden Spulen 22 (hier sind beispielhaft lediglich vier Spulen dargestellt) gebildet ist.

Es sei ausdrücklich darauf hingewiesen, dass die Figuren 1 bis 3c lediglich eine grobschematische Längsschnittdarstellung einer erfindungsgemäßen Pipettiervorrichtung 10 zeigen, die keinesfalls maßstäblich zu verstehen ist. Weiterhin sind Mehrzahlen von Bauteilen durch eine beliebige Bauteilanzahl, wie etwa drei Permanentmagnete 18 und vier Spulen 22, dargestellt. Tatsächlich kann sowohl die Anzahl der Permanentmagnete 18 wie auch die Anzahl der Spulen 22 größer oder auch kleiner als die dargestellte Anzahl sein.

Der Linearmotor 20, genauer seine Spulen 22, werden über eine Steuervorrichtung 24 angesteuert, die signalübertragungsmäßig mit den Spulen 22 verbunden ist. Als Signal gilt auch die Übertragung elektrischen Stroms zur Bestromung der Spulen und damit zur Erzeugung eines Magnetfelds durch diese.

An dem dosierseitigen Ende 12a des Zylinders 12 ist in an sich bekannter Weise lösbar eine Pipettierspitze 26 angebracht. Die Verbindung der Pipettierspitze 26 mit dem dosierseitigen Längsende 12a des Zylinders 12 ist ebenfalls lediglich grobschematisch dargestellt.

Die Pipettierspitze 26 definiert einen Pipettierraum bzw. Aufnahmeraum 28 in ihrem Inneren, welcher am kopplungsfernen Längsende 26a ausschließlich durch eine Pipettieröffnung 30 zugänglich ist. Die Pipettierspitze 26 verlängert den Pipettierkanal 11 während ihrer Ankopplung an den Zylinder 12 bis zur Pipettieröffnung 30.

In dem in Figur 1 dargestellten Beispiel der Pipettiervorrichtung 10 unmittelbar nach Abschluss eines konventionellen Aspirationsvorgangs im quasi-synchronen Pipettierbetrieb durch dieselbe Pipettiervorrichtung 10 ist im Pipettierraum 28 - und damit in der Pipettiervorrichtung 10 - eine Menge an Dosierflüssigkeit 32 aufgenommen. Zwischen dem Kolben 14 und der Dosierflüssigkeit 32 befindet sich dauerhaft Arbeitsgas 34, welches als Kraftvermittler zwischen dem Kolben 14 und der Dosierflüssigkeit 32 dient. Bevorzugt befindet sich zwischen dem Kolben 14 und der Dosierflüssigkeit 32 nur das Arbeitsgas 34, gegebenenfalls in seiner chemischen Zusammensetzung in vernachlässigbarer Weise verändert durch die Aufnahme flüchtiger Bestandteile aus der Dosierflüssigkeit 32.

Das Arbeitsgas 34 ist auch bei völlig entleerter Pipettierspitze 26 zwischen Kolben 14 und einer Dosierflüssigkeit 32 angeordnet, da die Pipettierspitze 26 zur Aspiration von Dosierflüssigkeit 32 in einen entsprechenden Dosierflüssigkeitsvorrat eingetaucht wird, sodass in diesem Zustand wenigstens an der Pipettieröffnung 30 ein Meniskus der Dosierflüssigkeit 32 vorhanden ist. Somit befindet sich Arbeitsgas 34 in jedem für einen Pipettiervorgang relevanten Zustand der Pipettiervorrichtung 10 dauerhaft vollständig zwischen dem Kolben 14 und einer Dosierflüssigkeit 32 und trennt diese voneinander.

Genauer befindet sich das Arbeitsgas 34 zwischen einer dosierseitigen Endfläche 14a des Kolbens 14, welche im vorliegenden Beispiel durch eine in axialer Richtung - bezogen auf die Kanalbahn K - zur Dosieröffnung 30 hin weisende Endfläche der Endkappe 16 gebildet ist und einem pipettieröffnungsferneren Meniskus 32a der im Pipettierraum 28 als Flüssigkeitssäule aufgenommenen Dosierflüssigkeit 32.

Ein Drucksensor 38 kann den Druck im Inneren des Pipettierkanals 11, zu dem auch der Druck kommunizierend in Verbindung stehende Aufnahmeraum 28 gehört, den Druck des Arbeitsgases 34 zwischen der Dosierflüssigkeit 32 und der dosierseitigen Endfläche 14a des Kolbens 14, erfassen und über eine Signalleitung an die Steuereinrichtung 24 übertragen. Der Drucksensor 38 bzw. von ihm gelieferte Drucksignale, welche den Druck des Arbeitsgases 34 repräsentieren, können zur Steuerung der Pipettiervorrichtung 10 im herkömmlichen quasi-synchronen Pipettierbetrieb sowohl zur Aspiration wie auch zur Dispensation von Dosierflüssigkeit 32 herangezogen werden.

Die Positionssensoranordnung 39 zur Erfassung der Kolbenposition ist am Pipettierkanal 11 vorgesehen und signalübertragungsmäßig mit der Steuervorrichtung 24 verbunden.

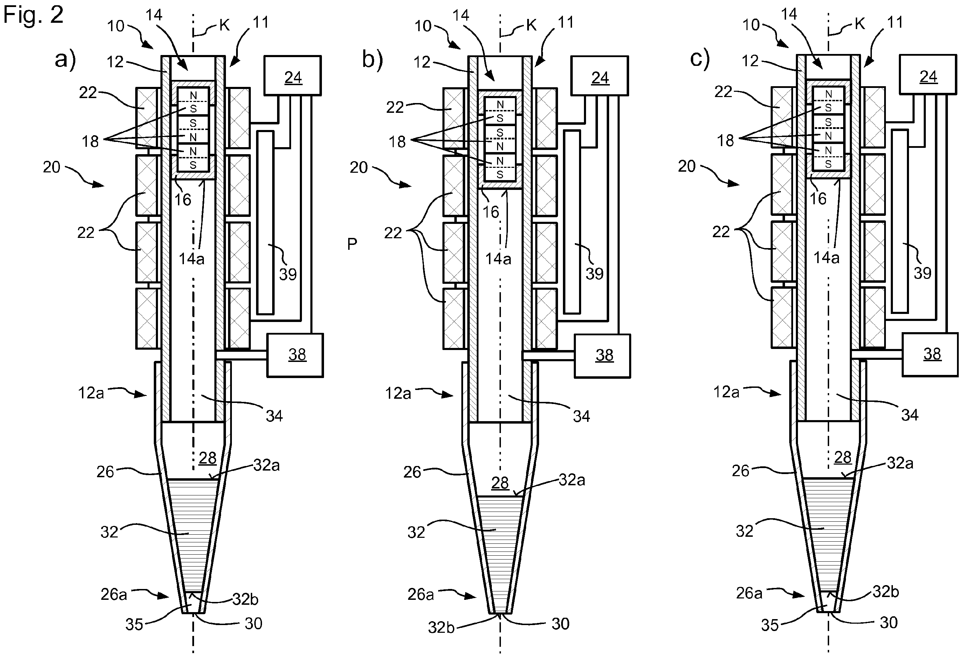

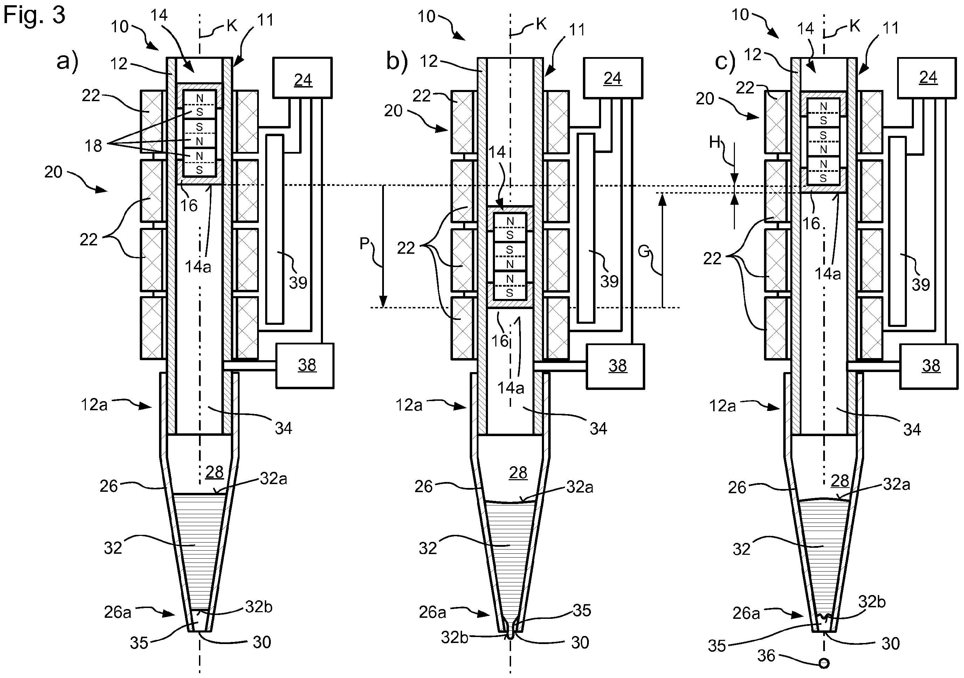

Ausgehend von dem in Figur 1 gezeigten Zustand wird nachfolgend eine Vorbereitung für einen impulsartigen Dispensationsvorgang der erfindungsgemäßen Pipettiervorrichtung 10 sowie der impulsartige Dispensationsvorgang selbst beschrieben:
Mit Verweis auf die Figuren 2a bis 2c wird eine Vorbereitung der Pipettiervorrichtung 10 beschrieben, mit welcher die Genauigkeit des impulsartigen Dispensationsvorgangs, welcher in den Figuren 3b und 3c dargestellt ist, erheblich erhöht werden kann. Dies bedeutet im Wesentlichen, dass geringere minimale Dispensationsdosen mit hoher Wiederholgenauigkeit abgegeben werden können als ohne entsprechende Vorbereitung. Die Vorbereitung ist nicht Teil des Dispensationsvorgangs selbst, da während der Vorbereitung sich die Menge an im Aufnahmeraum vorhandener Dosierflüssigkeit nicht ändert und der Dispensationsvorgang auch ohne die Vorbereitungshandlung ablaufen kann. Außerdem erfolgt die Manipulation von in der Pipettierspitze 26 aufgenommener Dosierflüssigkeit 32 während der Vorbereitung nicht impulsartig, sondern durch synchrone bzw. quasi-synchrone Bewegung von Kolben 14 und Dosierflüssigkeit 32.

Ausgehend von dem Zustand der Pipettiervorrichtung 10 unmittelbar nach Aspiration der vorbestimmten Dosierflüssigkeitsmenge 32 in die Pipettierspitze 26 im herkömmlichen quasi-synchronen Pipettierbetrieb (s. Fig. 1) bestromt die Steuervorrichtung 24 die Spulen 22 derart, dass der Pipettierkolben 14 im Sinne einer Erzeugung eines (ersten) Unterdrucks im Arbeitsgas 34 bewegt wird, das bedeutet von der Pipettieröffnung 30 weg. Dieser Unterdruck wird nicht impulsartig erzeugt, sondern mit Kolbenbeschleunigungen und -geschwindigkeiten, die für eine quasi-synchrone Verlagerung der im Aufnahmeraum 28 aufgenommenen Dosierflüssigkeitsmenge 32 sorgen.

Dadurch wird die in der Pipettiervorrichtung 10, genauer im Aufnahmeraum 28 der Pipettierspitze 26 bereitgestellte Dosierflüssigkeitsmenge 32 längs der Kanalachse K von der Pipettieröffnung 30 weg in die Pipettiervorrichtung 10, genauer in die Pipettierspitze 26, hinein verlagert. Die bereitgestellte Dosierflüssigkeit 32 ist zum Pipettierkolben 14 hin durch einen der Pipettieröffnung 30 ferner liegenden Meniskus 32a begrenzt und ist zur Pipettieröffnung 30 hin durch einen pipettieröffnungsnäheren Meniskus 32b begrenzt. Durch die Verlagerung der Dosierflüssigkeit 32 von der Pipettieröffnung 30 weg bildet sich zwischen der Pipettieröffnung 30 und dem pipettieröffnungsnäheren Meniskus 32b ein Gasvolumen 35.

Bei einer beispielhaft aufgenommenen Dosierflüssigkeitsmenge 32 von 40 µl beträgt das Gasvolumen 35 unmittelbar vor Auslösen des impulsartig dispensierenden Überdruckimpulses bevorzugt 4 bis 10 µl, besonders bevorzugt 4 bis 6 µl.

Durch die Verlagerung des pipettieröffnungsnäheren und daher den späteren Dosiertropfen 36 abgebenden Meniskus 32b von der Pipettieröffnung 30 weg erhält der nach dem Aspirieren mit undefinierter Gestalt, insbesondere undefinierter Wölbung, an der Pipettieröffnung 30 vorliegende Meniskus 32b eine stärker definierte Gestalt. Wenngleich nach dem Erzeugen des Gasvolumens 35 gemäß Figur 2a die Gestalt des pipettieröffnungsnäheren Meniskus 32b nicht vollständig definiert ist, so schwankt dessen Gestalt jedoch in nur geringem Maße um eine üblicherweise zu erwartende Gestalt.

Die Gestalt des pipettieröffnungsnäheren Meniskus 32b ist beispielsweise abhängig von der Oberflächenspannung der Dosierflüssigkeit 32, von deren Dichte, von deren Viskosität und von der Benetzbarkeit der Wandung der Pipettierspitze 26.

Gemäß Figur 2b kann die Steuervorrichtung 24 die Spulen 22 anschließend zur Bewegung des Pipettierkolbens 14 im Sinne einer Druckerhöhung im Arbeitsgas 34 antreiben, d. h. den Pipettierkolben 14 in Richtung zur Pipettieröffnung 30 hin verlagern. Dadurch wird die in der Pipettierspitze 26 bereitgestellte Dosierflüssigkeit 32 wieder zurück in Richtung zur Pipettieröffnung 30 hin verlagert, jedoch nicht darüber hinaus. Das Gasvolumen 35 zwischen Pipettieröffnung 30 und pipettieröffnungsnäherem Meniskus 32b wird dadurch geringer oder verschwindet sogar ganz. Auch diese Veränderung des Arbeitsgasdrucks erfolgt nicht impulsartig, sondern gemäß herkömmlichem, quasi-synchronen Betrieb.

Weiter kann die Steuervorrichtung 24 erneut die Spulen 22 zur Bewegung des Pipettierkolbens 14 im Sinne einer Verringerung des Drucks des Arbeitsgases 34 antreiben, d. h. in einem Aspirationssinn von der Pipettieröffnung 30 weg, wodurch erneut ein Gasvolumen 35 zwischen der Pipettieröffnung 30 und dem pipettieröffnungsnäheren Meniskus 32b der Dosierflüssigkeit 32 gebildet oder/und vergrößert wird. Auch dies geschieht in herkömmlichem quasi-synchronen Pipettierbetrieb. Durch die Hin- und Herbewegung der Dosierflüssigkeit 32 in der Pipettierspitze 26, wie sie in den Figuren 2a bis 2c dargestellt ist, wird für ein und dieselbe Dosierflüssigkeit 32 am Ende des Erzeugens des zweiten Unterdrucks gemäß Figur 2c ein stets gleich gestalteter Meniskus 32b gebildet, was für den anschließenden impulsartigen Dispensationsvorgang, wie er in den Figuren 3a bis 3c dargestellt und beschrieben ist, von Vorteil ist. Der Vorteil liegt in der Verringerung der minimal dispensierbaren Flüssigkeitsmenge und in der Verbesserung der erreichbaren Wiederholbarkeit derselben beim Aliquotieren.

Die Figur 3a stellt die Pipettiervorrichtung 10 von Figur 2c auf gesonderten Figurenblatt dar, um den Vergleich der unterschiedlichen Zustände der Pipettiervorrichtung 10 unmittelbar vor und während der Erzeugung eines Druckimpulses besser vergleichen zu können.

Zentraler Punkt der erfinderischen Idee der vorliegenden Anmeldung ist eine peitschenartige Bewegung des Kolbens 14. Diese peitschenartige Bewegung kommt in mehrerlei Ausprägungen zum Ausdruck.

Aufgrund des bereitgestellten bevorzugten Linearmotors 20 kann der Kolben 14 mit enormer Bewegungsdynamik längs der Kanalachse K bewegt werden. Zur Dispensation einer kleinen Flüssigkeitsmenge, etwa 500 nl der Dosierflüssigkeit 32, wird der Kolben 14 zunächst schnell im Sinne einer Erzeugung einer Druckerhöhung im Arbeitsgas 34 (hier: Dispensationsrichtung) zur Dosieröffnung 30 hin beschleunigt und bewegt. Die Steuervorrichtung 24 steuert die Spulen 22 des Linearmotors 20 nach Maßgabe eines Erfassungsergebnisses der Positionssensoranordnung 39 derart an, dass der Kolben 14 einen Druckimpuls im Arbeitsgas 34 erzeugt, indem er gemäß einem in einem Datenspeicher der Steuervorrichtung 24 vorgegebenen Pipettierkolben-Soll-Positionsverlauf geregelt zur Bewegung angetrieben wird. Dabei führt der Kolben 14 einen so großen Hub P aus, dass die dosierseitige Endfläche 14a des Kolbens 14 längs des Hubs P ein Vielfaches, etwa das 40-fache, des vorbestimmten Einzel-Dosiervolumens 36 (siehe Figur 3c) überstreicht. Der Kolben befindet sich dann in der in Figur 3b gezeigten Stellung am unteren Totpunkt seiner Bewegung in Dispensationsrichtung, woraufhin der Kolben 14 zu einer entgegengesetzten Bewegung in Aspirationsrichtung, also im Sinne einer Verringerung des Drucks des Arbeitsgases 34 (siehe Pfeil G) angetrieben wird.

Auch in diesem Abschnitt der Kolbenbewegung in Aspirationsrichtung wird die Bewegung des Kolbens 14 nach Maßgabe eines Erfassungsergebnisses der Positionssensoranordnung 39 derart regelnd gesteuert, dass der Kolben 14 gemäß einem in einem Datenspeicher der Steuervorrichtung 24 vorgegebenen Pipettierkolben-Soll-Positionsverlauf zur Bewegung angetrieben wird.

Die anfängliche impuls- oder peitschenartige Bewegung des Kolbens 14 in Dispensationsrichtung dauert im vorliegenden Beispiel weniger als 10 ms. Wenn der Kolben 14 seinen unteren Totpunkt erreicht, hat sich üblicherweise noch kein Teil der Dosierflüssigkeit 32 von der Pipettierspitze 26 gelöst. Der pipettieröffnungsnähere Meniskus 32b ist in einer eine Tropfenabgabe vorbereitenden Gestalt dargestellt. Die Gestalt des Meniskus 32b ist lediglich zu Illustrationszwecken gewählt, um zu verdeutlichen, dass eine Abgabe eines Dosierflüssigkeitstropfens 36 (s. Fig. 3c) bevorsteht. Der pipettieröffnungsfernere Meniskus 32a ist konkav gekrümmt dargestellt, um die Wirkung des Überdruckimpulses auf die Dosierflüssigkeit 32 darzustellen.

Der Kolben wird in Dispensationsrichtung etwa mit einer maximalen Geschwindigkeit von etwa 10.000 µl/s bewegt und hierzu mit einer Beschleunigung von bis zu 8 x 10⁶ µl/s² beschleunigt und wieder verzögert. Die maximale Geschwindigkeit tritt allerdings nur kurzzeitig auf. Dies bedeutet, dass der Kolben 14 in dem genannten Fall, in dem seine dosierseitige Endfläche 14a im Verlauf der Dispensationsbewegung ein Volumen von etwa dem 40-fachen des Einzel-Dosiervolumens 36, also etwa 20 µl, überstreicht, für diese Dispensationsbewegung etwa 6 bis 8 ms benötigt.

Die Dosierflüssigkeit 32 ist zu träge, um dieser Kolbenbewegung zu folgen. Stattdessen wird vom Kolben 14 ein Druckimpuls über das Arbeitsgas 34 hinweg zur Dosierflüssigkeit 32 in der Pipettierspitze 26 übertragen. Ausgehend von der in Figur 3b gezeigten Darstellung wird nun der Kolben 14 möglichst sofort zurück in Aspirationsrichtung beschleunigt, wobei der Bewegungshub G in Aspirationsrichtung im vorliegenden Fall insoweit geringer ist als der Hub P der Bewegung in Dispensationsrichtung, dass die endseitige Kolbenfläche 14a im Verlauf der Bewegung in Aspirationsrichtung ein Aspirationsvolumen überstreicht, welches um das Einzel-Dosiervolumen 36 geringer ist als das überstrichene Dispensationsvolumen.

Dies muss allerdings nicht so sein. Das Aspirationsvolumen kann auch genauso groß sein wie das Dispensationsvolumen. Ein um das Einzel-Dosiervolumen 36 reduziertes Aspirationsvolumen hat jedoch den Vorteil, dass sich die Lage des pipettieröffnungsnäheren Meniskus nach dem Pipettieren nicht ändert, was vor allem im Aliquotierbetrieb vorteilhaft ist.

In der In Figur 3c gezeigten Endstellung der Pipettiervorrichtung 10 nach dem Ende des impulsartigen Dispensationsvorgangs befindet sich die dosierseitige Endfläche 14a um einen resultierenden Hub H von der Ausgangsstellung der Figur 3a entfernt, wobei im dargestellten Beispiel die Kolbenfläche des Kolbens 14 multipliziert mit dem resultierenden Hub H dem Einzel-Dosiervolumen 36 entspricht.

Auch die Bewegung in Aspirationsrichtung im Rahmen der impulsartigen Dispensation läuft mit der genannten maximalen Geschwindigkeit ab, sodass auch diese Bewegung etwa 6 bis 8 ms benötigt. Mit zusätzlichen Verweilzeiten am unteren Totpunkt, welche durch Überwinden der Haftreibungsgrenze entstehen können, sowie unter Einbeziehung von etwaig auftretenden Bewegungsüberschwingern des Kolbens 14 um seine Soll-Position erfolgt die gesamte Kolbenbewegung bis zum Erreichen der Endstellung, wie sie in Figur 3c gezeigt ist, in etwa 14 bis 30 ms.

Erst nach der Umkehr der Kolbenbewegung von der Dispensationsrichtung in die Aspirationsrichtung wird ein definiertes Einzel-Dosiervolumen 36 in Form eines Tropfens von der Pipettieröffnung 30 weggeschleudert. Dieser Tropfen bewegt sich längs der verlängert gedachten Kanalbahn K zu einem unter der Pipettieröffnung 30 platzierten Dosierziel, etwa einem Behälter oder einem Well. Der pipettieröffnungsnähere Meniskus 32b kann nach dem Abschleudern des Dosierflüssigkeitstropfens 36 noch kurzzeitig nachschwingen.

Die Pipettierspitze 26 kann ein das Einzel-Dosiervolumen wesentlich übersteigendes Nenn-Pipettierraumvolumen aufweisen, etwa 200 - 400 µl, bevorzugt 300 µl.

Die Bewegung des Kolbens 14 in Aspirationsrichtung verläuft wiederum so schnell, dass von der dosierseitigen Endfläche 14a zur Dosierflüssigkeit 32 im Pipettierraum 28 ein Druckverringerungsimpuls übertragen wird.

Der Druckerhöhungsimpuls der Kolbenbewegung in Dispensationsrichtung bildet die steile steigende Flanke eines Druckimpulses. Dessen steile fallende Flanke wird durch den Druckverringerungspuls der Kolbenbewegung in Aspirationsrichtung gebildet. Je schneller die einzelne Kolbenbewegung abläuft, desto steiler ist die Flanke des ihr zugeordneten Druckveränderungspulses. Die beiden in entgegengesetzten Sinnen wirkenden Druckveränderungspulse können so einen "harten" Druckimpuls mit steilen Flanken definieren.

Das Auftreffen des so gebildeten "harten" Druckimpulses führt zu dem äußerst präzise wiederholbaren Dispensationsergebnis.

Während der gesamten Kolbenbewegung zur Erzeugung des Druckimpulses mit Überdruckanteil und mit Unterdruckanteil wird die Kolbenbewegung von der Steuervorrichtung 24 durch entsprechendes Anlegen einer Spannung an die Spulen 22 derart gesteuert, dass die Position des Pipettierkolbens 14 während des Druckimpulses einem vorgegebenen Pipettierkolben-Soll-Positionsverlauf folgt.

Unter Berücksichtigung ebenfalls von Positionserfassungssignalen der Positionssensoranordnung 39 kann der Pipettierkolben 14 am Ende des Dispensationsvorgangs in eine definierte Endstellung verbracht werden.

Überraschenderweise ist der hier vorgestellte Dispensationsvorgang unabhängig von der Größe der gewählten Pipettierspitze 26. Die gleiche oben beschriebene Kolbenbewegung würde auch bei einer deutlich kleineren Pipettierspitze von etwa einem Nenn-Pipettierraumvolumen von 50 µl zu exakt dem gleichen Ergebnis führen, vorausgesetzt, das gleiche Arbeitsgas und die gleiche Dosierflüssigkeit werden weiterhin bei unveränderten Dispensationsparametern verwendet.

Somit eignen sich die vorliegende erfindungsgemäße Pipettiervorrichtung und das vorgestellte erfindungsgemäße impulsartige Dispensationsverfahren hervorragend zum Aliquotieren von Flüssigkeiten aus selbst großen in Pipettierspitzen 26 aufgenommenen Vorräten von Dosierflüssigkeit 32. Auch über viele Aliquotier-Zyklen hinweg ändert sich das Dispensationsverhalten der Pipettiervorrichtung 10 bei sonst gleichen Bedingungen nicht. Das Dispensationsverhalten der erfindungsgemäßen Pipettiervorrichtung 10 ist somit auch unabhängig vom Füllungsgrad einer an den Zylinder 12 angekoppelten Pipettierspitze 26, solange diese für ein impulsartiges Dispensieren ausreichend gefüllt ist.

Die Kolbenbewegung kann aufgrund der Massenträgheit dem die Bewegung begründenden Steuersignal möglicherweise nicht vollkommen exakt folgen. An Stellen großer dynamischer Kräfte - namentlich bei der Umkehr der Bewegungsrichtung von der Dispensationsrichtung in die Aspirationsrichtung, aber auch beim Anhalten des Kolbens - kann der Kolben zum Überschwingen um die Soll-Position herum neigen. Entscheidend sollen daher im Zweifel die die Bewegung begründenden Steuersignale sein, die Abbild einer Soll-Bewegung sind.

Es sei ausdrücklich angemerkt, dass eine impulsartige Dispensation auch ausgehend vom Zustand gemäß Figur 1 erfolgen kann, d. h. ohne vorherige Bildung des pipettieröffnungsnahen Gasvolumens 35.

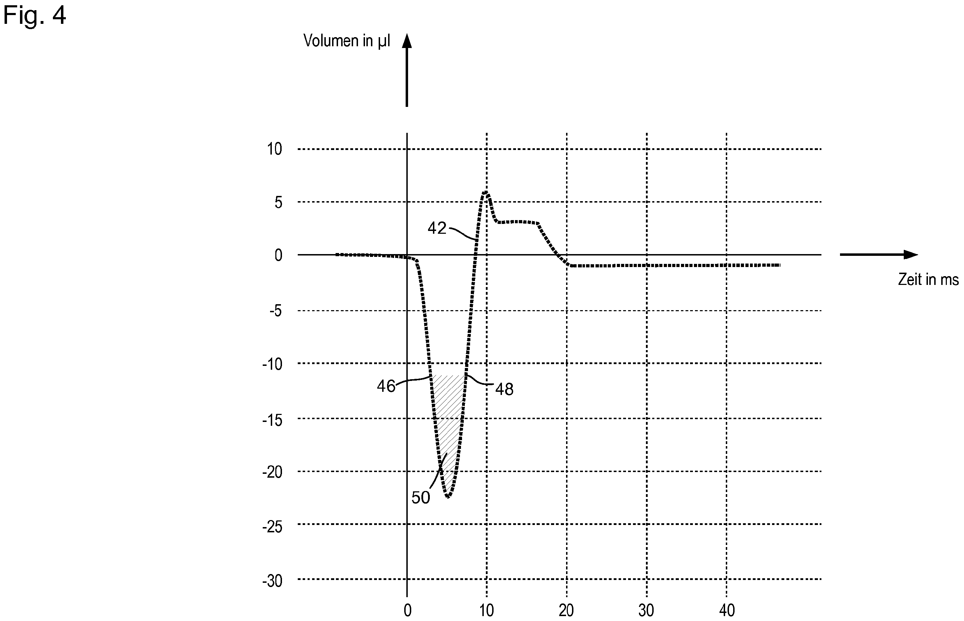

In Figur 4 ist grobschematisch und lediglich beispielhaft ein zeitlicher Verlauf 42 der Bewegung des Kolbens 14 (gestrichelte Linie) schematisiert dargestellt, wie sie bei einem Dispensationsvorgang der Figuren 3a bis 3c vorliegen könnten.

Die aktuelle Kolbenstellung zu Beginn des Dispensationsvorgangs, also die in Figur 3a gezeigte Kolbenstellung, ist in Figur 4 als Nullpunktlinie gewählt.

Die Abszisse der Darstellung von Figur 4 zeigt die Zeit in Millisekunden, wobei eine Rasterung von jeweils 10 ms gewählt ist.

Die Ordinate zeigt das Volumen in Mikroliter, wobei in Bezug auf die Ort-Zeit-Kurve 42 des Kolbens 14 das Volumen der Ordinatenachse das von der dosierseitigen Endfläche 14a des Kolbens 14 überstrichene Volumen angibt.

Mit 46 und 48 sind die Orte der sogenannten "Halbwegsweite" des Kolbens 14 zwischen seiner Startstellung bei 0 µl und seinem Umkehrpunkt der Bewegungsrichtung bei etwa -22,5 µl bezeichnet. Die Halbwegsweite liegt daher bei etwa bei -11,25 µl.

Das zeitliche Integral der Ort-Zeit-Kurve des Kolbens 14 - etwa repräsentiert durch die Ort-Zeit-Kurve der dosierseitigen Kolbenfläche 14a als einem Bezugspunkt des Kolbens 14 - zwischen dem Durchgang durch den Ort der Halbwegsweite bei der Bewegung in Dispensationsrichtung und dem erneuten Durchgang durch diesen Ort während seiner Bewegung in Aspirationsrichtung ist ein Maß für das mit der Kolbenbewegung tatsächlich impulsartig dispensierte Einzel-Dosiervolumen 36. Eine durch dieses Integral gebildete Fläche ist als Fläche 50 in Figur 4 schraffiert dargestellt. Der Zusammenhang zwischen dem Flächeninhalt der Fläche 50 und dem tatsächlich pipettierten Einzel-Dosiervolumen 36 lässt sich für unterschiedliche Flüssigkeitsklassen einfach empirisch ermitteln und in einem Datenspeicher der Pipettiervorrichtung 10 hinterlegen.

Somit lassen sich sehr kleine Einzel-Dosiervolumina 36 von 2 µl oder weniger in höchstem Maße wiederholgenau mit der gleichen Pipettiervorrichtung 10 impulsartig dispensieren, mit welcher auch große Pipettiervolumen von mehreren 100 µl in herkömmlichem quasi-synchronen Pipettierbetrieb sowohl aspiriert als auch dispensiert werden können.

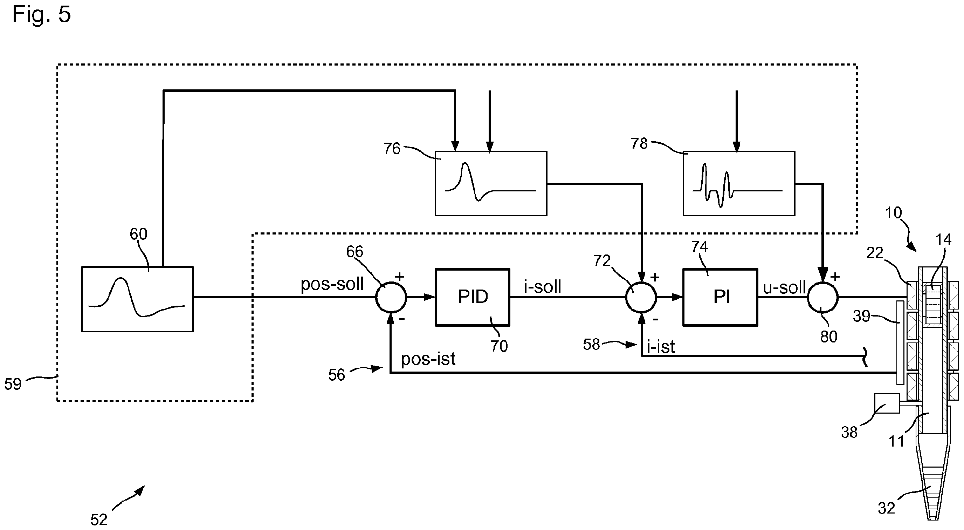

In Figur 5 ist grobschematisch eine Regelungsstruktur 52 dargestellt, wie sie in der Steuervorrichtung 24 zur Anwendung kommen kann.

Die Regelungsstruktur 52 ist eine kaskadierte Regelungsstruktur mit einem äußeren Regelkreis 56 und einem inneren Regelkreis 58.

In einem Datenspeicher 59 der Steuervorrichtung 24 ist ein Pipettierkolben-Soll-Positionsverlauf 60 gespeichert, welcher Soll-Werte des Drucks im Arbeitsgas als Funktion der Zeit für einen impulsartigen Dispensationsvorgang zur Dispensation eines vorbestimmten Flüssigkeitsvolumens enthält.

Tatsächlich kann in dem Datenspeicher 59 der Steuervorrichtung 24 eine Mehrzahl von Pipettierkolben-Soll-Positionsverläufen gespeichert sein, und zwar mehrdimensional geordnet für unterschiedliche Flüssigkeitsklassen und innerhalb der unterschiedlichen Flüssigkeitsklassen für unterschiedliche Dosierflüssigkeitsmengen.

Abhängig von der durch manuelle Dateneingabe oder Datenübertragung von einer anderen Vorrichtung angezeigten benötigten Dosierflüssigkeitsmenge wählt die Steuervorrichtung 24 für die ebenfalls durch manuelle Dateneingabe oder automatisierte Datenübertragung angezeigte Flüssigkeitsklasse den für die angezeigte Dosierflüssigkeitsmenge zutreffenden vorbestimmten Pipettierkolben-Soll-Positionsverlauf 60 aus und führt diesen einem äußeren Operator 66 zu. Diesem ersten Operator 66 wird außerdem das Erfassungsergebnis der Positionssensoranordnung 39 und damit die Istposition des Pipettierkolbens 14 zugeführt. Der erste Operator 66 gibt somit einen Unterschiedswert der Pipettierkolbenposition aus, welche ein Maß für den Unterschied zwischen der geltenden Pipettierkolben-Sollposition und der erfassten Pipettierkolben-Istposition für jeden Erfassungszeitpunkt ist.

Der vorbestimmte Pipettierkolben-Soll-Positionsverlauf 60 ist außerdem zur vorteilhaft schnellen Vorsteuerung der Bewegung des Pipettierkolbens 14 im Datenspeicher 59 der Steuervorrichtung 24 hinterlegt. Der sich aus dem für den jeweiligen Erfassungszeitpunkt ergebende Wert der Pipettierkolbenposition gemäß dem vorbestimmten Pipettierkolben-Soll-Positionsverlauf 60 wird im Wege einer an sich bekannten Vorsteuerung ebenfalls dem ersten Operator 66 zugeführt.

Ein den Unterschied zwischen Pipettierkolben-Sollposition und Pipettierkolben-Ist-position repräsentierender Wert wird vom ersten Operator 66 dem ersten, äußeren Regler 70 zugeführt, welcher vorteilhaft als PID-Regler ausgestaltet ist. Dessen Übertragungsfunktion ermittelt aus dem den Unterschied zwischen Soll- und Ist-position des Pipettierkolbens 14 repräsentierenden Unterschiedswert einen Sollwert für den in den Spulen 22 des Bewegungsantriebs 20 fließenden Strom zum Erfassungszeitpunkt. Dieser Strom-Sollwert wird einem zweiten Operator 72 zugeführt. Dem zweiten Operator 72 wird außerdem der Strom-Istwert zum Erfassungszeitpunkt zugeführt, welcher ohne Weiteres an den Spulen 22 in an sich bekannter Weise ermittelbar ist.

Der zweite Operator 72 ermittelt somit einen den Unterschied zwischen dem Strom-Sollwert und dem Strom-Istwert zum Erfassungszeitpunkt repräsentierenden Wert und führt diesen dem zweiten inneren Regler 74 zu. Vorteilhafterweise weist der zweite bzw. innere Regler 74 ein PI-Regelverhalten auf.

Im Datenspeicher der Steuervorrichtung 24 ist ein vorbestimmter Spulen-Soll-Stromwertverlauf 76 gespeichert, welcher sich aus dem vorbestimmten Pipettierkolben-Soll-Positionsverlauf 60 ergibt.

Der für den jeweiligen Erfassungszeitpunkt geltende vorbestimmte Spulen-Soll-Stromwert wird dem zweiten Operator 72 im Wege einer an sich bekannten Vorsteuerung aus dem vorbestimmten Spulen-Soll-Stromwertverlauf 76 zugeführt, um eine möglichst schnelle Regelung der Bewegung des Pipettierkolbens 14 derart zu erhalten, dass die Bewegung des Pipettierkolbens 14 möglichst genau mit dem für den jeweiligen Pipettiervorgang ausgewählten Pipettierkolben-Soll-Positionsverlauf 60 übereinstimmt.

Die Übertragungsfunktion des zweiten bzw. inneren Reglers 74 ermittelt aus dem vom zweiten Operator 72 erhaltenen, den Unterschied zwischen Strom-Sollwert und Strom-Istwert zum Erfassungszeitpunkt repräsentierenden Eingangswert einen Spulen-Soll-Spannungswert zum Erfassungszeitpunkt, welcher an den Spulen 22 angelegt wird.

Die Regelkreisstruktur 52 kann für jede Phase der Spulen 22 gesondert vorliegen.

Wiederum ist zur Erzielung einer möglichst schnellen und hochgenauen Steuerung der Kolbenposition zur Vorsteuerung auch der Spulen-Spannung im Datenspeicher der Steuervorrichtung 24 ein vorbestimmter Spulen-Soll-Spannungsverlauf 78 hinterlegt, welcher sich aus dem vorbestimmten Pipettierkolben-Soll-Positionsverlauf 60 oder/und dem vorbestimmten Spulen-Soll-Stromwertverlauf 76 ergibt.

Ein dritter Operator 80 ist dargestellt, um die Vorsteuerung der Spulenspannung mittels des vorbestimmten Spulen-Soll-Spannungsverlaufs auszuführen.

Mit der in Figur 5 gezeigten kaskadierten Regelstruktur kann der Pipettierkolben 14 durch Anlegen einer Betriebsspannung an die Spulen 22 auf Grundlage der erfassten Pipettierkolbenposition und des erfassten Spulenstroms im Bereich einiger weniger Millisekunden so genau bewegt werden, dass die Pipettierkolbenposition einem vorgegebenen Pipettierkolbenpositionsverlauf im Wesentlichen folgt.

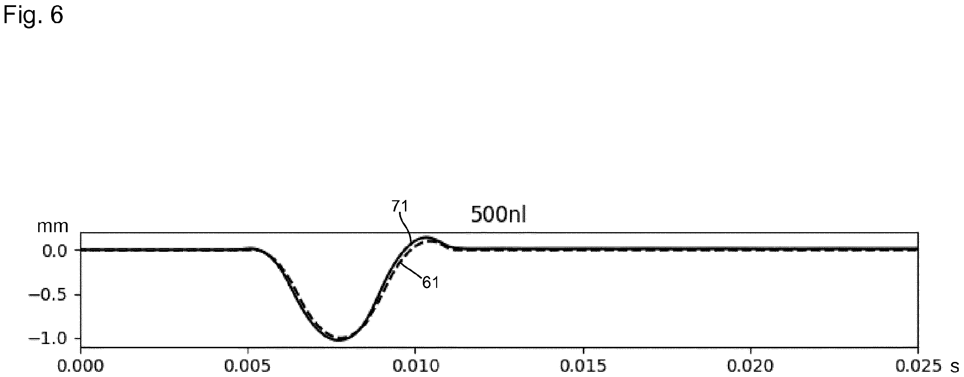

In den Figuren 6 bis 8 sind Pipettierkolben-Soll-Positionsverläufe und Pipettierkolben-Ist-Positionsverläufe für unterschiedliche impulsartig zu dispensierende Dosierflüssigkeitsmengen 36 ein und derselben Dosierflüssigkeit aufgetragen, die mit ein und derselben Pipettiervorrichtung impulsartig dispensiert wurden. Die Abszisse der Graphen der Figuren 6 bis 18 zeigt die Zeit in Sekunden, wobei in jeder der Figuren 6 bis 8 ein Zeitraum von 25 ms dargestellt ist.

Die Ordinate der Graphen von Figuren 6 bis 8 zeigt einen Kolbenhub in Millimeter an. Die Startposition des Pipettierkolbens 14 hat dabei die Koordinate 0 mm.

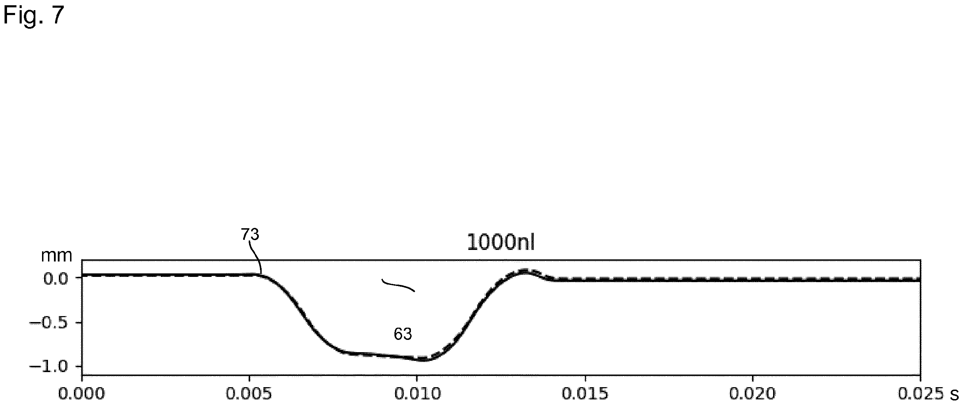

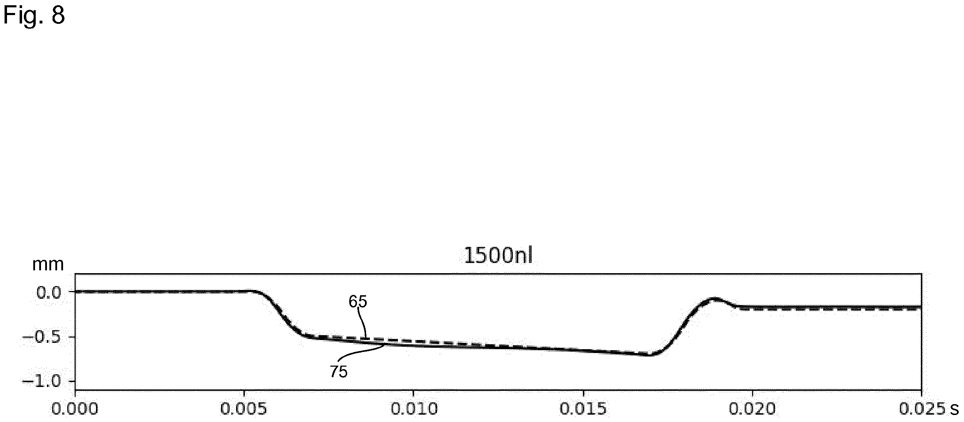

In den Figuren 6 bis 8 ist der Pipettierkolben-Soll-Positionsverlauf in Millimetern als Funktion der Zeit in Sekunden jeweils strichliniert aufgetragen und mit den Bezugszeichen 61 (Figur 6), 63 (Figur 7) und 65 (Figur 8) bezeichnet.

Ebenso ist in den genannten Figuren der Pipettierkolben-Ist-Positionsverlauf in Millimetern als Funktion der Zeit in Sekunden mit durchgezogener Linie aufgezeichnet und mit Bezugszeichen 71 (Figur 6), 73 (Figur 7) und 75 (Figur 8) bezeichnet.

Negative Ordinatenwerte bezeichnen eine Verlagerung des Pipettierkolbens ausgehend von der beim Wert 0 mm liegenden Startposition des Dispensiervorgangs in Dispensationsrichtung. Dementsprechend bezeichnen positive Ordinatenwerte eine Lage des Pipettierkolbens auf der Aspirationsseite bezogen auf die Start-position.

Figur 6 zeigt die Positionsverläufe 61 und 71 für ein impulsartig zu dispensierendes Dosierflüssigkeitsvolumen von 500 nl. Bei etwa 5 ms beginnt die Verlagerung des Pipettierkolbens 14 in Dispensationsrichtung zur Pipettieröffnung 30 hin. Der Druck des Arbeitsgases 34 im Aufnahmeraum 28 wird daher ansteigen. Bei etwa bei 8 ms erreicht der Pipettierkolben 14 seine Position größter Annäherung an die Pipettieröffnung 30, gekennzeichnet durch den betragsmäßig größten Wert auf der Dispensationsseite der Startposition des Kolbens 14. Hier setzt unmittelbar eine Bewegungsumkehr des Pipettierkolbens 14 ein, der dann in Aspirationsrichtung bewegt wird, erkennbar durch die betragsmäßig kleiner werdenden negativen Werte.

Bei etwa 9,5 ms erreicht der Pipettierkolben 14 wieder seine Startposition. Er wird jedoch in Aspirationsrichtung über diese hinaus bewegt, bis er etwa im Bereich zwischen 1,03 und 1,06 ms seine Position maximaler Entfernung von der Pipettieröffnung 30 erreicht. Von da an wird der Pipettierkolben wieder in Dispensationsrichtung zurück zur Startposition bewegt, die er etwa bei 1,12 ms erreicht, also etwa 6,1 bis 6,2 ms nach Beginn der Kolbenbewegung im Rahmen des Dispensationsvorgangs.

Die Ablösung des Dosierflüssigkeitstropfens erfolgt erst nach Erreichen der Position maximaler Annäherung an die Pipettieröffnung 30. Dies gilt auch für die Dispensationen der Figuren 7 und 8.

Die Figur 7 zeigt den Pipettierkolben-Soll-Positionsverlauf 63 und den Pipettierkolben-Ist-Positionsverlauf 73 für ein impulsartig zu dispensierendes Dosierflüssigkeitsvolumen von 1 µl. Ausweislich der nahezu übereinstimmenden Soll- und Ist-Positionsverläufe 63 und 73 dauert die Kolbenbewegung für diesen Dispensationsvorgang etwa 9 ms, nämlich von etwa dem Zeitpunkt 5 ms bis etwa 14 ms. Wiederum wird der Pipettierkolben 14 für die Dispensation zunächst an die Pipettieröffnung 30 angenähert, abschnittsweise sogar mit konstanter Geschwindigkeit. Die Phase konstanter Kolbengeschwindigkeit dauert im dargestellten Beispiel von etwa 7,8 bis 10,2 ms. Kurz nach dem Ende der Phase konstanter Geschwindigkeit erreicht der Pipettierkolben 14 seine Position größter Annäherung an die Pipettieröffnung 30.

Bei etwa 12,75 ms erreicht der Pipettierkolben 14 wieder seine Startposition und bei etwa 13,2 ms seine Position maximaler Entfernung von der Pipettieröffnung. Bei etwa 14 ms endet die Kolbenbewegung.

In Figur 8 sind der Pipettierkolben-Soll-Positionsverlauf 65 und der Pipettierkolben-Ist-Positionsverlauf 75 für eine impulsartige Dispensation eines Dosierflüssigkeitstropfens von 1,5 µl aufgetragen.

Wiederum beginnt die Bewegung des Pipettierkolbens 14 bei etwa 5 ms mit einer Annäherung an die Pipettieröffnung 30. Nach einer Beschleunigungsphase wird der Kolben 14 ab etwa 7 ms mit konstanter Geschwindigkeit in Dispensationsrichtung bewegt. Die Bewegung konstanter Annäherungsgeschwindigkeit an die Pipettieröffnung 30 endet etwa bei 17 ms. Kurz danach ist der Kolben 14 der Pipettieröffnung 30 maximal angenähert.

Seine Startposition erreicht der Pipettierkolben 14 bei der großen implusartig dosierten Flüssigkeitsmenge nicht mehr. Bei etwa 18,8 ms erreicht der Pipettierkolben 14 seine Position größter Entfernung von der Pipettieröffnung 30 und bei etwa 19,5 ms, also etwa 14,5 ms nach Beginn der Bewegung des Pipettierkolbens, ist diese wieder beendet.

Wie die Ausführungsbeispiele zeigen, kann die Pipettierkolbenbewegung ganz allgemein Phasen konstanter Kolbengeschwindigkeit aufweisen. Bevorzugt sind diese während der anfänglichen, ersten Kolbenbewegung in Dispensationsrichtung wenigstens nicht kürzer, vorzugsweise sogar länger, als in der daran anschließenden Phase einer Kolbenbewegung in Aspirationsrichtung.

Mit zunehmender impulsartig dosierter Dosiermenge, welche mit derselben Pipettiervorrichtung dispensiert wird, kann der Bewegungsimpuls des Pipettierkolbens zwar länger werden, jedoch wird überraschend dabei der in der ersten Dispensationsbewegung zurückgelegte Kolbenhub kleiner. Bei den gemäß Fig. 8 dispensierten 1,5 µl beträgt der Kolbenhub nur noch etwa 0,7 mm in Dispensationsrichtung, während er bei der Dosiermenge von 1 µl gemäß Fig. 7 noch etwa 0,95 mm und bei der Menge von 0,5 µl von Fig. 6 etwa 1 mm betrug.

Im Gegensatz dazu ist der Kolbenhub von der Position maximaler Entfernung von der Pipettieröffnung in die Endposition am Ende der Kolbenbewegung eines Dispensiervorgangs unabhängig von der Dosiermenge etwa gleich groß. Zumindest unterschieden sich die Kolbenpositionen maximaler Entfernung von der Pipettieröffnung und der Endposition bei unterschiedlichen impulsartig dispensierten Dosiervolumina bzw. -mengen betragsmäßig weniger als sich die Kolbenpositionen der Startposition und der maximalen Annäherung an die Pipettieröffnung unterscheiden.

Die mit dem vorliegenden Regelverfahren erzielbaren Wiederholgenauigkeiten von dispensierten Dosierflüssigkeitsvolumina liegen im Bereich von unter 3 %.

## Patentansprüche

1. Pipettiervorrichtung (10) zum impulsartigen Pipettieren von Dosierflüssigkeiten in kleinen Dosiervolumina von weniger als 2 µl unter Vermittlung eines druckveränderlichen Arbeitsgases (34), wobei die Pipettiervorrichtung (10) umfasst:
- einen wenigstens teilweise mit Arbeitsgas (34) gefüllten Pipettierkanal (11),
- eine Pipettierspitze (26), welche einen wenigstens teilweise mit Arbeitsgas (34) gefüllten Aufnahmeraum (28) bereitstellt, der mit dem Pipettierkanal (11) Druck kommunizierend in Verbindung steht und welcher durch eine Pipettieröffnung (30) zugänglich ist, so dass mittels Veränderung des Drucks des Arbeitsgases im Aufnahmeraum durch die Pipettieröffnung (30) hindurch eine Menge an im Aufnahmeraum aufgenommener Dosierflüssigkeit veränderbar ist,
- einen längs des Pipettierkanals (11) beweglich im Pipettierkanal aufgenommenen Pipettierkolben (14) zur Veränderung des Drucks des Arbeitsgases (34),
- einen Bewegungsantrieb (20), um den Pipettierkolben (14) zur Bewegung längs des Pipettierkanals (11) anzutreiben,
- eine Steuervorrichtung (24) zur Ansteuerung des Bewegungsantriebs (20), und
- eine Positionserfassungsvorrichtung zur Erfassung der Position des Pipettierkolbens (14) und zur Ausgabe eines die Position des Pipettierkolbens (14) repräsentierenden Positionssignals an die Steuervorrichtung (24),
wobei die Steuervorrichtung (24) dazu ausgebildet ist, den Bewegungsantrieb (20) zum Bewirken eines Pipettiervorgangs zur Erzeugung eines - bezogen auf einen unmittelbar vor Beginn eines Pipettiervorgangs im Pipettierkanal (11) herrschenden Bezugsdruck, bei welchem kein Fluid durch die Pipettieröffnung hindurchtritt, - Druckimpulses im Pipettierkanal (11) derart auf Grundlage des von der Positionserfassungsvorrichtung ausgegebenen Positionssignals anzusteuern, dass die Position des Pipettierkolbens (14) während des Impulses einem vorgegebenen Pipettierkolben-Soll-Positionsverlauf (60) folgt, wobei die Dauer der Pipettierkolbenbewegung zur Erzeugung des Druckimpulses 35 ms nicht übersteigt,
**dadurch gekennzeichnet, dass** die Steuervorrichtung (24) dazu ausgebildet ist, den Bewegungsantrieb (20) zur Erzeugung des Druckimpulses im Pipettierkanal (11) derart auf Grundlage des von der Positionserfassungsvorrichtung ausgegebenen Positionssignals anzusteuern, dass die Position des Pipettierkolbens (14) während des Impulses einem vorgegebenen Pipettierkolben-Soll-Positionsverlauf (60) folgt, wobei die Steuervorrichtung (24) einen Datenspeicher umfasst, in welchem für eine Vorsteuerung eine Mehrzahl von vorbestimmten Pipettierkolben-Soll-Positionsverläufen (60) gespeichert ist, wobei abhängig wenigstens von der Dosierflüssigkeit und der zu pipettierenden Flüssigkeitsmenge ein Pipettierkolben-Soll-Positionsverlauf (60) aus der Mehrzahl von vorbestimmten Pipettierkolben-Soll-Positionsverläufen (60) als für den jeweiligen Pipettiervorgang aktiver vorbestimmter Pipettierkolben-Soll-Positionsverlauf (60) auswählbar ist.

2. Pipettiervorrichtung (10) nach Anspruch 1,
**dadurch gekennzeichnet, dass** der Druckimpuls des Pipettiervorgangs - bezogen auf den Bezugsdruck - einen Überdruck- und einen Unterdruckanteil aufweist.

3. Pipettiervorrichtung (10) nach Anspruch 1 oder 2,
**dadurch gekennzeichnet, dass** der Pipettierkolben-Soll-Positionsverlauf (60) Pipettierkolben-Sollpositionen beiderseits der Startposition oder/und beiderseits der Endposition des Pipettierkolbens (14) zu Beginn des Pipettiervorgangs enthält.

4. Pipettiervorrichtung (10) nach einem der vorhergehenden Ansprüche,
**dadurch gekennzeichnet, dass** die Positionserfassungsvorrichtung wenigstens einen Positionssensor (39) aufweist, welcher zur Erfassung der Position des Pipettierkolbens (14) und zur Ausgabe des die erfasste Kolbenposition anzeigenden Positionssignals an die Steuervorrichtung (24) ausgebildet ist.

5. Pipettiervorrichtung (10) nach einem der vorhergehenden Ansprüche,
**dadurch gekennzeichnet, dass** der Pipettierkolben (14) ein magnetischer Kolben (14) mit wenigstens einem Permanentmagneten (18) ist und dass der Bewegungsantrieb (20) elektrisch bestrombare Spulen (22) aufweist, wobei die Steuervorrichtung (24) dazu ausgebildet ist, die Versorgung der Spulen (22) mit elektrischer Energie zu steuern.

6. Pipettiervorrichtung (10) nach Anspruch 5,
**dadurch gekennzeichnet, dass** die Steuervorrichtung (24) die Versorgung der Spulen (22) mit elektrischer Energie abhängig von einem erfassten aktuellen Zustand der Versorgung der Spulen (22) mit elektrischer Energie und abhängig von dem Positionssignal steuert.

7. Pipettiervorrichtung (10) nach Anspruch 6,
**dadurch gekennzeichnet, dass** die Steuervorrichtung (24) eine kaskadierte Regelkreisstruktur (52) umfasst, wobei die Steuervorrichtung (24) dazu ausgebildet ist, in einem inneren Regelkreis (58) der kaskadierten Regelkreisstruktur (52) eine an den Spulen (22) angelegte elektrische Spannung nach Maßgabe eines Unterschieds zwischen einem Soll-Stromwert und einem erfassten Stromwert eines in den Spulen (22) fließenden Stroms einzustellen, wobei die Steuervorrichtung (24) weiter dazu ausgebildet ist, den Soll-Stromwert des in den Spulen (22) fließenden Stroms in einem äußeren Regelkreis (56) der kaskadierten Regelkreisstruktur (52) nach Maßgabe eines Unterschieds zwischen einem Soll-Positionswert und einem durch das Positionssignal angezeigten Ist-Positionswert des Pipettierkolbens (14) einzustellen.

8. Pipettiervorrichtung (10) nach Anspruch 7,
**dadurch gekennzeichnet, dass** in dem Datenspeicher für eine Vorsteuerung ein den vorbestimmten Pipettierkolben-Soll-Positionsverlauf (60) bewirkender vorbestimmter Spulen-Soll-Stromverlauf (76) gespeichert ist.

9. Pipettiervorrichtung (10) nach Anspruch 8,
**dadurch gekennzeichnet, dass** in dem Datenspeicher für eine Vorsteuerung ein den vorbestimmten Spulen-Soll-Stromverlauf (76) bewirkender vorbestimmter Spulen-Soll-Spannungsverlauf (78) gespeichert ist.

10. Pipettiervorrichtung (10) nach einem der vorhergehenden Ansprüche,
**dadurch gekennzeichnet, dass** eine impulsartige Dispensation von Dosierflüssigkeit aus einer im Aufnahmeraum (28) der Pipettierspitze (26) aufgenommenen Dosierflüssigkeitsmenge (32) erfolgt, wobei das Volumen der aufgenommenen Dosierflüssigkeitsmenge (32) um wenigstens das Fünffache größer ist als das Volumen der in einem Dispensiervorgang impulsartig zu dispensierenden Dosierflüssigkeit (36).

11. Pipettiervorrichtung (10) nach einem der vorhergehenden Ansprüche,
**dadurch gekennzeichnet, dass** sie auch zum herkömmlichen, nicht impulsartigen Aspirieren von Dosierflüssigkeit ausgebildet ist.

12. Pipettiervorrichtung (10) nach einem der vorhergehenden Ansprüche, unter Einbeziehung des Anspruchs 2,
**dadurch gekennzeichnet, dass** die wirksame Kolbenfläche (14a) des Pipettierkolbens (14) beim impulsartigen Dispensieren von Dosierflüssigkeit während der Erzeugung des Überdruckanteils des Druckimpulses wenigstens das 1,4-Fache des Volumens der impulsartig dispensierten Dosierflüssigkeit (36) überstreicht.

13. Pipettiervorrichtung (10) nach einem der vorhergehenden Ansprüche,
**dadurch gekennzeichnet, dass** sie zur impulsartigen Dispensation im Jet-Modus ausgebildet ist, in welchem das dispensierte Flüssigkeitsvolumen zwischen der abgebenden Dosierflüssigkeitsmenge (32) in der Pipettierspitze (26) und einem Dispensationsziel eine Strecke im freien Flug zurücklegt.

## Claims

1. A pipetting apparatus (10) for pulsed pipetting of dosage liquids in small metered volumes of less than 2 µl with the aid of a modifiable-pressure working gas (34), the pipetting apparatus (10) encompassing:
- a pipetting conduit (11) at least partly filled with working gas (34);
- a pipette tip (26) that furnishes a receiving space (28) that is at least partly filled with working gas (34), that is pressure-communicatingly connected to the pipetting conduit (11), and that is accessible through a pipetting opening (30), so that by means of a modification of the pressure of the working gas in the receiving space, a quantity of dosage liquid received in the receiving space is modifiable through the pipetting opening (30);
- a pipetting piston (14) received in the pipetting conduit, movably along the pipetting conduit (11), for modifying the pressure of the working gas (34);
- a motion drive system (20) for driving the pipetting piston (14) to move along the pipetting conduit (11);
- a control apparatus (24) for applying control to the motion drive system (20); and
- a position detection apparatus for detecting the position of the pipetting piston (14) and for outputting to the control apparatus (24) the position signal representing the position of the pipetting piston (14),
the control apparatus (24) being embodied to apply control to the motion drive system (20) in order to generate a pressure pulse - with respect to a reference pressure which exists in the pipetting conduit (11) immediately before a pipetting operation begins and at which no fluid passes through the pipetting opening - in the pipetting conduit (11), on the basis of the position signal outputted by the position detection apparatus, in such a way that the position of the pipetting piston (14) during the pulse follows a predefined target pipetting-piston position curve (60), the duration of the pipetting-piston motion for generation of the pressure pulse not exceeding 35 ms,
**characterized in that** the control apparatus (24) is embodied to apply control to the motion drive system (20) in order to generate a pressure pulse on the basis of the position signal outputted by the position detection apparatus, in such a way that the position of the pipetting piston (14) during the pulse follows a predefined target pipetting-piston position curve (60), wherein the control apparatus (24) encompasses a data memory, in which a plurality of predetermined target pipetting-piston position curves (60) is stored for pilot control, wherein, depending at least on the dosage liquid and on the quantity of liquid to be pipetted, one target pipetting-piston position curve (60) is selectable from the plurality of predetermined target pipetting-piston position curves (60) as an active predetermined target pipetting-piston position curve (60) for the respective pipetting operation.

2. The pipetting apparatus (10) according to Claim 1,
**characterized in that** the pressure pulse of the pipetting operation encompasses a positive-pressure component and a negative-pressure component with respect to the reference pressure.

3. The pipetting apparatus (10) according to Claim 1 or 2,
**characterized in that** the target pipetting-piston position curve (60) contains target pipetting-piston positions on either side of the starting position and/or on either side of the final position of the pipetting piston (14) at the beginning of the pipetting operation.

4. The pipetting apparatus (10) according to one of the preceding claims, **characterized in that** the position detection apparatus comprises at least one position sensor (39) that is embodied to detect the position of the pipetting piston (14) and to output to the control apparatus (24) the position signal indicating the detected piston position.

5. The pipetting apparatus (10) according to one of the preceding claims, **characterized in that** the pipetting piston (14) is a magnetic piston (14) having at least one permanent magnet (18); and the motion drive system (20) comprises electrically energizable coils (22), the control apparatus (24) being embodied to control the supply of electrical energy to the coils (22).

6. The pipetting apparatus (10) according to Claim 5,
**characterized in that** the control apparatus (24) controls the supply of electrical energy to the coils (22) depending on a detected instantaneous state of the supply of electrical energy to the coils (22), and depending on the position signal.

7. The pipetting apparatus (10) according to Claim 6,
**characterized in that** the control apparatus (24) encompasses a cascaded control-loop structure (52), the control apparatus (24) being embodied to establish, in an internal control loop (58) of the cascaded control-loop structure (52), an electrical voltage applied to the coils (22) in accordance with a difference between a target current value and a detected current value of a current flowing in the coils (22), the control apparatus (24) further being embodied to establish the target current value of the current flowing in the coils (22), in an external control loop (56) of the cascaded control-loop structure (52), in accordance with a difference between a target position value and an actual position value, indicated by the position signal, of the pipetting piston (14).

8. The pipetting apparatus (10) according to Claim 7,
**characterized in that** a predetermined target coil-current curve (76) that brings about the predetermined target pipetting-piston position curve (60) is stored in the data memory for pilot control.

9. The pipetting apparatus (10) according to Claim 8,
**characterized in that** a predetermined target coil-voltage curve (78) that brings about the predetermined target coil-current curve (76) is stored in the data memory for pilot control.

10. The pipetting apparatus (10) according to one of the preceding claims, **characterized in that** pulsed dispensing of dosage liquid takes place out of a dosage-liquid quantity (32) received in the receiving space (28) of the pipette tip (26), the volume of the received dosage-liquid quantity (32) being at least five times greater than the volume of the dosage liquid (36) to be dispensed in pulsed fashion in a dispensing operation.

11. The pipetting apparatus (10) according to one of the preceding claims, **characterized in that** it is also embodied for conventional, non-pulsed aspiration of dosage liquid.

12. The pipetting apparatus (10) according to one of the preceding claims, including Claim 2,
**characterized in that** the effective piston surface (14a) of the pipetting piston (14) sweeps out, upon pulsed dispensing of dosage liquid during generation of the positive-pressure component of the pressure pulse, at least 1.4 times the volume of the dosage liquid (36) dispensed in pulsed fashion.

13. The pipetting apparatus (10) according to one of the preceding claims, **characterized in that** it is embodied for pulsed dispensing in a jet mode, in which the dispensed liquid volume travels a certain distance in free flight between the delivering dosage-liquid quantity (32) in the pipette tip (26) and a dispensing destination.

## Revendications

1. Appareil de pipetage (10) pour le pipetage pulsé de liquides de dosage dans de petits volumes mesurés de moins de 2 µl à l'aide d'un gaz de travail à pression modifiable (34), l'appareil de pipetage (10) comprenant :
- un conduit de pipetage (11) au moins partiellement rempli de gaz de travail (34) ;
- une pointe de pipette (26) qui fournit un espace de réception (28) qui est au moins partiellement rempli de gaz de travail (34), qui est relié par communication de pression au conduit de pipetage (11), et qui est accessible par une ouverture de pipetage (30), de sorte qu'au moyen d'une modification de la pression du gaz de travail dans l'espace de réception, une quantité de liquide de dosage reçue dans l'espace de réception est modifiable à travers l'ouverture de pipetage (30) ;
- un piston de pipetage (14) reçu dans le conduit de pipetage, mobile le long du conduit de pipetage (11), pour modifier la pression du gaz de travail (34) ;
- un système d'entraînement (20) pour entraîner le piston de pipetage (14) à se déplacer le long du conduit de pipetage (11) ;
- un appareil de commande (24) pour appliquer une commande au système d'entraînement du mouvement (20) ; et
- un appareil de détection de position pour détecter la position du piston de pipetage (14) et pour transmettre à l'appareil de commande (24) le signal de position représentant la position du piston de pipetage (14),
l'appareil de commande (24) étant conçu pour commander le système d'entraînement du mouvement (20) afin de générer une impulsion de pression - par rapport à une pression de référence qui existe dans le conduit de pipetage (11) immédiatement avant le début d'une opération de pipetage et pour laquelle aucun fluide ne passe par l'ouverture de pipetage - dans le conduit de pipetage (11), sur la base du signal de position émis par l'appareil de détection de position, de manière à ce que la position du piston de pipetage (14) pendant l'impulsion suive une courbe prédéfinie de position cible du piston de pipetage (60), la durée du mouvement du piston de pipetage pour la génération de l'impulsion de pression ne dépassant pas 35 ms,
**caractérisé en ce que** l'appareil de commande (24) est conçu pour appliquer une commande au système d'entraînement du mouvement (20) afin de générer une impulsion de pression sur la base du signal de position émis par l'appareil de détection de position, de telle sorte que la position du piston de pipetage (14) pendant l'impulsion suive une courbe prédéfinie de position cible du piston de pipetage (60), dans lequel l'appareil de commande (24) englobe une mémoire de données, dans laquelle une pluralité de courbes prédéterminées de position cible du piston de pipetage (60) est stockée pour la commande pilote, dans laquelle, en fonction au moins du liquide de dosage et de la quantité de liquide à pipeter, une courbe de position cible du piston de pipetage (60) peut être sélectionnée parmi la pluralité de courbes cible prédéterminées de position du piston de pipetage (60) en tant que courbe prédéterminée active de position cible du piston de pipetage (60) pour l'opération de pipetage en question.

2. Appareil de pipetage (10) selon la revendication 1,
**caractérisé en ce que** l'impulsion de pression de l'opération de pipetage comprend une composante de pression positive et une composante de pression négative par rapport à la pression de référence.

3. Appareil de pipetage (10) selon la revendication 1 ou 2,
**caractérisé en ce que** la courbe de position cible du piston de pipetage (60) contient des positions cibles du piston de pipetage de part et d'autre de la position de départ et/ou de part et d'autre de la position finale du piston de pipetage (14) au début de l'opération de pipetage.

4. Appareil de pipetage (10) selon l'une des revendications précédentes, **caractérisé en ce que** l'appareil de détection de position comprend au moins un capteur de position (39) qui est conçu pour détecter la position du piston de pipetage (14) et pour délivrer à l'appareil de commande (24) le signal de position indiquant la position détectée du piston.

5. Appareil de pipetage (10) selon l'une des revendications précédentes, **caractérisé en ce que** le piston de pipetage (14) est un piston magnétique (14) ayant au moins un aimant permanent (18) ; et le système d'entraînement de mouvement (20) comprend des bobines (22) pouvant être alimentées électriquement, l'appareil de commande (24) étant conçu pour commander l'alimentation des bobines (22) en énergie électrique.

6. Appareil de pipetage (10) selon la revendication 5,
**caractérisé en ce que** l'appareil de commande (24) commande l'alimentation en énergie électrique des bobines (22) en fonction d'un état instantané détecté de l'alimentation en énergie électrique des bobines (22), et en fonction du signal de position.

7. Appareil de pipetage (10) selon la revendication 6,
**caractérisé en ce que** l'appareil de commande (24) englobe une structure de boucle de commande en cascade (52), l'appareil de commande (24) étant conçu pour établir, dans une boucle de commande interne (58) de la structure de boucle de commande en cascade (52), une tension électrique appliquée aux bobines (22) en fonction d'une différence entre une valeur de courant cible et une valeur de courant détectée d'un courant circulant dans les bobines (22), l'appareil de commande (24) est en outre conçu pour établir la valeur de courant cible du courant circulant dans les bobines (22), dans une boucle de commande externe (56) de la structure de boucle de commande en cascade (52), en fonction d'une différence entre une valeur de position cible et une valeur de position réelle, indiquée par le signal de position, du piston de pipetage (14).

8. Appareil de pipetage (10) selon la revendication 7,
**caractérisé en ce qu'**une courbe prédéterminée de courant de bobine cible (76) qui entraîne la courbe prédéterminée de position cible du piston de pipetage (60) est stockée dans la mémoire de données pour la commande pilote.

9. Appareil de pipetage (10) selon la revendication 8,
**caractérisé en ce qu'**une courbe prédéterminée de tension de bobine cible (78) qui entraîne la courbe prédéterminée de courant de bobine cible (76) est stockée dans la mémoire de données pour la commande pilote.

10. Appareil de pipetage (10) selon l'une des revendications précédentes, **caractérisé en ce que la** distribution pulsée de liquide de dosage a lieu à partir d'une quantité de liquide de dosage (32) reçue dans l'espace de réception (28) de la pointe de pipette (26), le volume de la quantité de liquide de dosage reçue (32) étant au moins cinq fois supérieur au volume du liquide de dosage (36) à distribuer de manière pulsée lors d'une opération de distribution.

11. Appareil de pipetage (10) selon l'une des revendications précédentes, **caractérisé en ce qu'**il est également conçu pour l'aspiration conventionnelle, non pulsée, de liquide de dosage.

12. Appareil de pipetage (10) selon l'une des revendications précédentes, y compris la revendication 2,
**caractérisé en ce que** la surface effective du piston (14a) du piston de pipetage (14) balaie, lors de la distribution pulsée du liquide de dosage pendant la génération de la composante de pression positive de l'impulsion de pression, au moins 1,4 fois le volume du liquide de dosage (36) distribué de manière pulsée.

13. Appareil de pipetage (10) selon l'une des revendications précédentes, **caractérisé en ce qu'**il est conçu pour la distribution pulsée en mode jet, dans lequel le volume de liquide distribué parcourt une certaine distance en vol libre entre la quantité de liquide de dosage (32) dans la pointe de la pipette (26) et une destination de distribution.
